# EUROPÄISCHE PATENTSCHRIFT

(11) **EP 1 742 837 B1**
(45) Veröffentlichungstag und Bekanntmachung des Hinweises auf die Patenterteilung: **02.06.2010**
(21) Anmeldenummer: 05741346.0
(22) Anmeldetag: 19.04.2005
(51) Int. Cl.: B63H 9/06

(54) **WASSERFAHRZEUG MIT EINEM FREI AUSFLIEGENDEN DRACHENARTIGEN WINDANGRIFFSELEMENT ALS WINDANTRIEB**
WATERCRAFT COMPRISING A FREE-FLYING KITE-TYPE WIND-ATTACKED ELEMENT AS A WIND-POWERED DRIVE UNIT
BATEAU A PROPULSION PAR ENERGIE EOLIENNE PAR UN ELEMENT A VOL LIBRE, DU TYPE CERF-VOLANT, SOUMIS A L'ACTION DU VENT

(30) Priorität: 19.04.2004 DE 102004018837
(43) Veröffentlichungstag der Anmeldung: 17.01.2007
(73) Patentinhaber: Skysails GmbH & Co. KG, 21079 Hamburg (DE)
(72) Erfinder: WRAGE, Stephan, 22767 Hamburg (DE); MÜLLER, Stefan, 85375 Neufahrn (DE)
(74) Vertreter: Glawe, Delfs, Moll
(86) Internationale Anmeldenummer: PCT/EP2005/004185
(87) Internationale Veröffentlichungsnummer: WO 2005/100149

(56) Entgegenhaltungen:
- GB-A- 2 098 946
- GB-A- 2 098 952

## Beschreibung

*Die Erfindung betrifft ein Wasserfahrzeug mit Windantrieb bei dem ein frei ausfliegendes drachenartiges Windangriffselement mit einem Tragflächenprofil als ausschließlicher, als Hilfs- oder als Not-Antrieb nur über ein, sich gegebenenfalls in eine Anzahl von Halteseilen auffächerndes, Zugseil mit dem Fahrzeug verbunden ist, bei dem das Windangriffselement über mindestens ein bei oder im dem Windangriffselement vorgesehenes mit diesem in Wirkverbindung stehendes aktives Antriebselement durch Veränderung seiner aerodynamischen Wirkung zum Führen in eine und Halten in einer vorgegebene(n) Position in Bezug auf das Wasserfahrzeug und*/*oder zum dynamischen Manövrieren, insbesondere auf vorgegebenen Flugbahnen, veränderbar ist.*

*Ein vom Wind angetriebenes* Wasserfahrzeug ist aus der WO/097448 bekannt. Nachteilig bei diesem Fahrzeug ist, dass die aerodynamische Form des Windangriffselements ausschließlich über zusätzliche Steuerleinen, die bis zum Schiffsrumpf geführt sind, verändert werden kann. Hierbei tritt die Schwierigkeit auf, dass bei hoch fliegendem Windangriffselement die zusätzlichen Leinen wegen ihrer erforderlichen großen Längen eine erhebliche Masse ausmachen, so dass die Leistungsfähigkeit des Antriebs herabgesetzt ist, weil dies Masse von dem Windantriebselement zusätzlich getragen werden muss und die entsprechende Kraft somit nicht in Vortrieb umgesetzt werden kann. Außerdem können sich mehrere Zugleinen vertüdern (verwirren oder verschlingen).

*Bei einem Wasserfahrzeug der eingangs genannten Art (*GB 2 098 952 A*)*, das als nächstliegender Stand der Technik angesehen wird, *können durch ein vom Windangriffselement herabhängendes Gewicht Ventile im Windangri ffsel emen t be tätigt werden, um so die Form des Windangriffselements zu verändern.*

*Der Erfindung liegt die Aufgabe zugrunde, ein Wasserfahrzeug der eingangs genannten Art zu schaffen, mit dem eine vielseitigere Veränderung der Form des Windangriffselements möglich ist.*

Diese Aufgabe wird mit den im kennzeichnenden Teil des Anspruchs 1 angegebenen Maßnahmen gelöst. Die Erfindung beruht dabei auf der Erkenntnis, dass durch Veränderung der aerodynamischen Form des Windangriffselements dieses bei unterschiedlichen Windrichtungen und Windstärken optimal geführt werden kann, wobei die Steueraktionen von einer Einheit ausgehen sollten, welche recht nahe bei oder in dem Windangriffselement gelegen ist, so dass die Anzahl der aktiven Verbindungen, wie Leinen und dergleichen ein Minimum ist. Dabei soll nicht ausgeschlossen werden, dass das Hauptzugseil aus mehreren Einzelleinen besteht. Wichtig ist jedoch die gemeinsam Führung über entsprechende Führungselemente und die gemeinsame Befestigung an einem Krafteinleitungspunkt zum Windangriffselement hin, wobei von diesem "Kraftknotenpunkt" aus wieder eine Verzweigung ausgehen kann.

Das Windangriffselement kann dabei wahlweise in feste Positionen oder aber "manövrierend" geführt werden, d.h. dass das Windangriffselement in vorgegebnen Positionen bestimmte Flugfiguren ausführt.

Besonders vorteilhaft bei der Erfindung ist der Umstand, dass die Kräfte zur Veränderung des Windangriffselements lediglich über kurze Wege übertragen werden müssen, so dass präzise Einstellungen ermöglicht sind, zumal bei der Betätigung über lange Zugleinen schon durch deren Dehnungen keine präzise Übermittlung der Steuerbefehle möglich ist. Weiterhin ist das Windangriffselement nicht dadurch Gefahren ausgesetzt, dass sich die Leinen miteinander verschlingen und es manövrierunfähig wird. Man muss sich nämlich vor Augen führen, dass die korrekte Einstellung und Führung des Windangriffselements auch für das Wasserfahrzeug insgesamt von erheblicher Bedeutung ist, da beispielsweise ein Manöver zur Fahrtrichtungsänderung stets eine Neueinstellung des Windangriffselements mit einschließen muss. Wären hier beispielsweise Leinen überkreuzt oder vertakelt, so könnte entweder die Richtungsänderung nicht ausgeführt werden oder das Windangriffselement müsste gekappt werden.

Weiterhin vorteilhaft ist, dass wenn die Betätigungselemente bzw. die Mittel zur Krafterzeugung in unmittelbarer Nähe des Windangriffselements oder sogar in demselben vorgesehen sind, die entsprechenden Regeleinrichtungen auch mindestens teilweise dort unmittelbar beim Windangriffselement vorgesehen sein können, so dass auch auf aufwendige und störanfällige Signalübertragungswege weitgehend verzichtet werden kann.

Bei der Veränderung der aerodynamischen Wirkung des Windangriffselements sind alle aerodynamischen Steuerungen, wie Klappen, Ruder, sowie die Änderung seiner Ausrichtung, Anstellung und/oder Form eingeschlossen.

Die Änderung der Form kann dabei bevorzugt durch eine symmetrische oder unsymmetrische Änderung des Tragflächenprofils über eine Beeinflussung der Ausrichtung seiner Strömungsabrisskante, durch Verwindung des Tragflächenprofils, durch symmetrische und/oder durch unsymmetrische Änderung der Wölbung des Tragflächenprofils und/oder durch Änderung des Angriffspunkts des Zugseils, erfolgen. Bei anderen vorteilhaften Weiterbildungen kann die Veränderung der aerodynamischen Eigenschaften auch über eine Veränderung der Geometrie des Tragflächenprofils vorgenommen werden, wie es sich im Querschnitt des Drachens oder seiner Wölbung manifestiert. Eine derartige Änderung der Form besteht bei einem zweilagigen Tragflächenprofil vorteilhafterweise in einem Verändern der des Abstands zwischen den beiden Lagen durch entsprechende Elemente.

Aus Gewichtsgründen kann es günstig sein, dass eine beidseitige und/oder gegensinnige Betätigung zur gleichsinnigen bzw. unsymmetrischen Änderung des Tragflächenprofils durch ein einziges Antriebselement erfolgt. In diesem Fall werden beispielsweise zwei Querruder jeweils gegensinnig betrieben, wobei die neutrale Position die Mittellage beider Ruder bildet.

Bei einem aus textilem Material bestehenden Windangriffselement, wie es beispielsweise ein Drachen nach Art eines Gleitschirms darstellt, kann die Veränderung der aerodynamischen Wirkung vorzugsweise durch Verstellen oder durch Verlängern oder Verkürzen von mindestens einer Steuerleine mittels des Antriebselements erfolgen.

Um die für die aerodynamischen Verstellungen aufzuwendenden Kräfte anzupassen kann es günstig sein, wenn mindestens eine Steuerleine mindestens eine Umlenkung oder Rückführung in Form eines Flaschenzugs aufweist, wobei der Flaschenzug sowohl zur über- als auch zur Untersetzung dienen kann.

*Da* die Steuerleinen eine matrixartige Anordnung bilden, ist die Beeinflussung eines Drachens nach Art eines Gleitschirms erleichtert. Dabei bezieht sich diese Anordnung auf einen Bereich unterhalb des Drachens, von dem aus die aerodynamischen Betätigungen gemeinsam vorgenommen werden können. Hierbei ist es günstig, wenn verschiedene Steuerleinen jeweils über ein gemeinsam angetriebenes Betätigungselement zusammengefasst angetrieben werden, da sich dadurch die Zahl der Antriebselemente verringert. Das gemeinsam angetriebene Betätigungselement kann dabei beispielsweise aus einem drehbar gelagerten Element, einer Wippe, einem Hebel, einer Zahnriemenscheibe oder dergl. bestehen, welches gemeinsam über einen Antriebsmotor bewegt wird. Die einzelnen Steuerleinen führen dann zu unterschiedlich gewählten Befestigungspunkten auf dem gemeinsamen Betätigungselement, so dass sich aus der Geometrie des Befestigungsorts der jeweilige Hub ergibt um, mit den die betreffende Steuerleine bewegt wird. Dabei können die einzelnen Steuerleinen auch noch durch Flaschenzüge oder dergleichen über- oder untersetzt werden. Auf diese Weise setzt sich dann die Bewegung des Betätigungselements in die gewünschte Geometrieveränderung des gesamten oder von Teilen des Windangriffselements um.

Bei einer anderen günstigen Ausführung besteht das Antriebselement aus einer elektrischen Winsch und/oder einem linearen Aktor, wobei der lineare Aktor durch ein pneumatisches Element gebildet wird, welches sich unter Überdruck in Querrichtung ausdehnt und dadurch in seiner Länge verkürzt bzw. umgekehrt. Derartige Elemente werden "künstlicher Muskel" genannt und vorzugsweise pneumatisch angetrieben.

Zur Energiegewinnung für die Steuerbetätigungen am Windangriffselement ist es günstig, wenn in einem in der Nähe des Windangriffselements vorgesehenen und strömungsgünstig verkleideten Behältnis eine Windturbine vorgesehen ist, welche auf einen elektrischen Generator wirkt, der dann einen elektrischen Energiespeicher auflädt. Bei Verwendung von pneumatischen Elementen als Aktoren kann auch eine Turbine vorgesehen sein, die einen nachgeschalteten Verdichter antreibt, der dann den Überdruck für die pneumatischen Elemente liefert. Als Energiespeicher dient in diesem Fall ein Druckspeicher.

In dem in der Nähe des Windangriffselements vorgesehenen Behältnis sind auch die Mittel zur Steuerung des Windangriffselements untergebracht, welche Ausgangssignale zur Ansteuerung der Antriebselemente (Aktoren) liefern. Hierbei sind insbesondere Mittel vorgesehen, um ein Steuersignal für das Antriebselement aus einem Signal für den Kurs des Fahrzeugs, die Windrichtung und/oder die Windgeschwindigkeit zu ermitteln

Günstig ist es, wenn für die Steuerung von der Richtung und der Geschwindigkeit des scheinbaren Windes am Windangriffselement ausgegangen wird, da dessen Ausrichtung hierdurch bestimmt ist.

Das Windangriffselement wird bevorzugt durch eine Selbststeuervorrichtung (Autopilot) gesteuert, wobei ein Sensorelement vorgesehen ist, dem mindestens ein vorzugsweise als Beschleunigungsmesser ausgestaltetes Wandlerelement nachgeschaltet ist, welches mindestens mittelbar ein Steuersignal an das Antriebselement abgibt. Ein weiteres Sensorelement gibt ein Ausgangssignal mit Bezug auf seine Position und/Ausrichtung im Raum ab, welche insbesondere auf die Position des Schiffes bezogen ist.

Die Ist-Position des Windangriffselements in Relation zum Schiff kann vorteilhafterweise auch unter Verwendung von Höhenmessern und/oder Erdmagnetfeldsensoren an Windangriffselement und Schiff und/oder mit Hilfe der Ausrichtung und der Länge des Zugseil bestimmt werden. Auf diese Weise kann erreicht werden, dass die Daten auch bei Ausfall eines Systems weiterhin zur Verfügung stehen.

Wenn ein anderes Sensorelement vorgesehen ist, welches einen bevorstehenden oder bereits eingetretenen Strömungsabriss anzeigt oder als ein im Bereich der umströmten Oberfläche des Windangriffselements vorgesehenes.Element ausgestaltet ist, welches bei anliegender Luftströmung ein Ausgangssignal abgibt, kann die Flugsteuerung so ausgelegt werden, dass im Falle eines Stalls ein Absinken des Windangriffselements verhindert wird.

Es hat sich weiterhin als vorteilhaft erwiesen, wenn Mittel vorgesehen sind, um ein Steuersignal zur räumlichen Ausrichtung des Windangriffselements oder für die Manöverfiguren extern durch eine mit dem Wasserfahrzeug verbundene Bordeinheit zu erzeugen. Weiterhin sind vorteilhaft Signalübertragungsmittel vorgesehen, um das dritte Steuersignal von der Bordeinheit an die Selbststeuervorrichtung zu übermitteln, wobei es sich bevorzugt bei diesem Steuersignal um ein Diffential-GPS oder ein anderes Navigationssignal handelt, welches eine Information über die Position des Windangriffselements zum Wasserfahrzeug enthält.

Wenn zusätzliche Speichermittel und Vergleichermittel vorgesehen sind, welche eine Speicherung von vorangehenden Zeitpunkten zugeordneten Signalen mit zeitlich später erscheinenden Signalen in der Weise ermöglichen, dass zeitlich aufeinander folgende Manöverzustände vergleichbar sind, kann eine vorhersehende Steuerung des Windangriffselements in dem Sinne erzeugt werden, dass bei Einleitung eines Manövers, die vorsehbaren Folgen für den Schiffsbetrieb berücksichtigt werden.

Bei einer anderen günstigen Ausführung der Erfindung ist das Antriebselement und/oder das Sensorelement in dem Behältnis vorgesehen ist, welches auch den Angriffspunkt für das Zugseil bildet und von dem Halte- und Steuerleinen ausgehen, mit denen das Windangriffselement verbunden ist. Dieses Behältnis ist bevorzugt strömungsgünstig ausgeführt und kann auch eine Windturbine zur Energiegewinnung für die aerodynamische Steuerung des Windangriffselements aufweisen. Die strömungsgünstige Form kann dabei tropfenartig oder ein Tragflügelprofil sein, das in Richtung des Zugseils oder orthogonal davon orientiert sein kann.

Die dargestellte Erfindung eignet sich insbesondere für seegehende Schiffe oder solche mit Fahrtgebieten im Bereich großer Seen.

Bei einer günstigen Anwendung zur Energiegewinnung ist ein durch die Strömung des Wassers, insbesondere über eine Schiffsschraube oder Turbine, angetriebener Generator vorgesehen ist, welcher die erzeugte elektrische Energie einem Energiespeicher, insbesondere einem Wasserstoffgenerator zuführt. Der durch elektrolytische Spaltung des Wassers gewonnene Wasserstoff wird gespeichert und in einem Reservoir festgehalten.

Weitere bevorzugte Ausführungsbeispiele ergeben sich aus den Unteransprüchen.

Vorteilhafte Ausführungsbeispiele sind in den Figuren dargestellt und werden nachfolgend beschrieben. Dabei wird das erfindungsgemäße Windangriffselement auch synonym kurz als "Drachen" bezeichnet. Es ist aber auch die Bezeichnung "Flügel" richtig, weil es sich um ein Fluggerät mit Tragflügelfunktion handelt. Es zeigen:
Fig. 1 ein von dem erfindungsgemäßen Drachen-System gezogenes Schiff in schräger Draufsicht,
Fig. 1a ein Koordinatensystem, welches bei der nachfolgenden Beschreibung als Bezugssystem dient,
Fig. 1b ein Ausführungsbeispiel des erfindungsgemäßen Windangriffselements in Form eines Gleitschirms gemäß der Erfindung.
Fig. 2 ein Prinzipschaltbild der Steuerung des erfindungsgemässen Windangriffselements in schematischer Darstellung,
Fig. 3 ein Blockschaltbild der Steuerung des erfindungsgemäßen Windantriebssystems als Blockschaltbild in detaillierter Darstellung,
Fig. 4 eine Steuereinrichtung für das Windangriffselement in perspektivischer Darstellung,
Fig. 4a eine schematische Darstellung des mechanischen Prinzips eines ersten Ausführungsbeispiels der Steuereinrichtung gemäß Fig. 4,
Fig. 4b eine schematische Darstellung des mechanischen Prinzips eines zweiten Ausführungsbeispiels der Steuereinrichtung gemäß Fig. 4,
Fig. 4c eine schematische Darstellung des mechanischen Prinzips eines ersten Ausführungsbeispiels einer Reffeinrichtung für eine Steuereinrichtung gemäß Fig. 4 sowie
Fig. 4d eine schematische Darstellung des mechanischen Prinzips eines zweiten Ausführungsbeispiels einer Reffeinrichtung für eine Steuereinrichtung gemäß Fig. 4.

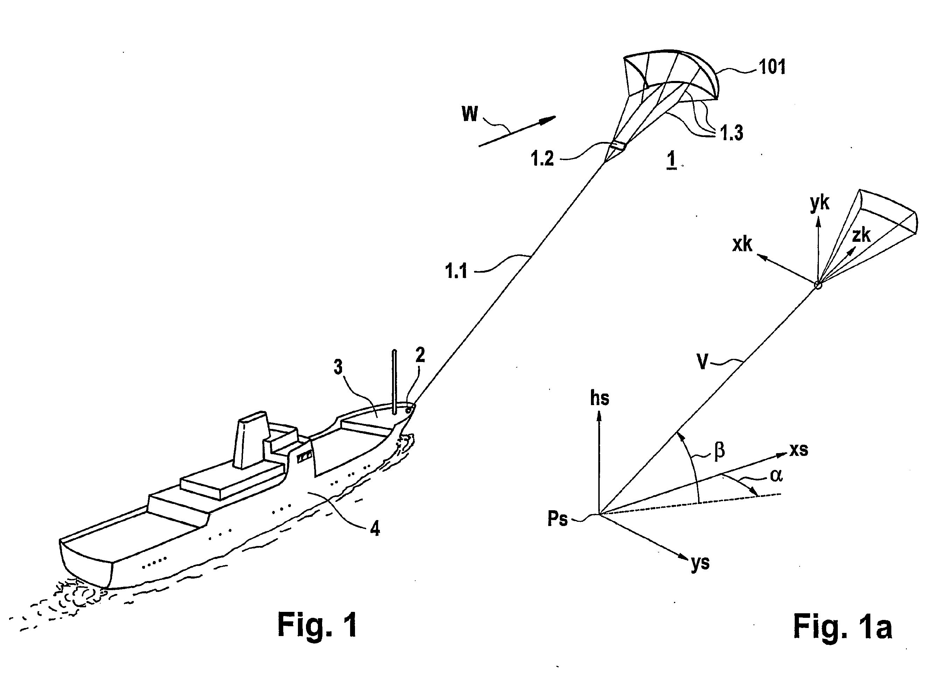

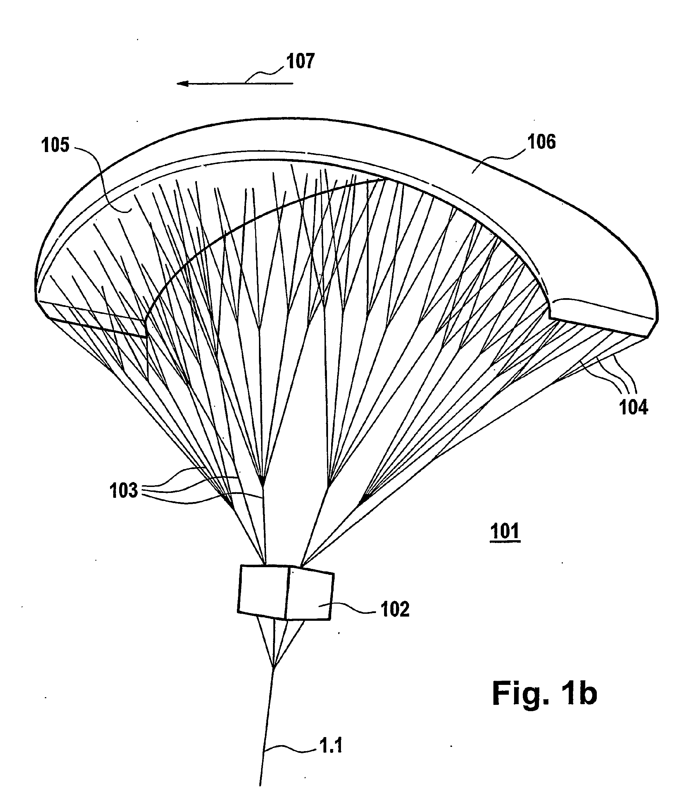

In Fig. 1 ist in den schräger Draufsicht ein von dem erfindungsgemäßen Drachensystem gezogenes Schiff wiedergegeben. Dabei ist ein Windangriffselement 1 über einen Zugseil 1.1 mit einer Kraftangriffsvorrichtung 2, die im Bugbereich eines Schiffes 4 vorgesehen ist, mit letzterem verbunden. Das Zugseil 1.1 ist zu einer zentralen Gondel 1.2 geführt, von der aus eine Anzahl von Halteleinen 1.3 ausgeht, welche zu dem nach Art eines Gleitschirms mit Drachenprofil ausgestalteten Windangriffselement 1 geführt sind und diesem die notwendige Form geben. Zu den Einzelheiten hierzu wird auf die Beschreibung weiter unten verwiesen. Die scheinbare Windrichtung im Bereich des Windangriffselements 1 ist mit W bezeichnet. Der entsprechende Windvektor ist durch seine Größe und Richtung gekennzeichnet. Gegebenenfalls wird seine zeitliche Veränderung noch durch eine die Böigkeit kennzeichnende Größe B gekennzeichnet, die zeitlich mittlere Abweichung der Windgeschwindigkeit vom mittleren Wert bildet und als Skalar darstellbar ist, der quasi den Radius einer Kugel um die Spitze des Windvektors W bildet.

In Fig. 1a ist ein Koordinatensystem wiedergegeben, welches bei der nachfolgenden Beschreibung als Bezugssystem herangezogen wird. Dabei gibt xs die Fahrtrichtung des Schiffes an und ys ist die Richtung quer zur Fahrtrichtung. Das Koordinatensystem ist dabei fest mit einem Punkt Ps des. Schiffes verbunden zu denken. Bei diesem Punkt handelt es sich bevorzugt um den Kraftangriffspunkt 2 im Bugbereich. Die Höhe hs entspricht dabei der Richtung der Achse z des konventionellen Koordinatensystems. Sie gibt die Höhe über dem Bezugspunkt Ps an. Dieser Bezugspunkt ist in bevorzugter Weise der Ort der Anbringung der GPS-Antenne eines Bord eigenen GPS-Gerätes, so dass die Koordinaten eines Punktes außerhalb von Ps, bei dem sich ein anderes GPS-Gerät befindet, durch Differenzbildung der von beiden Geräten ausgegebenen Koordinaten erzeugt werden können. (Sollte sich die GPS-Antenne das Bord eigenen GPS-Gerätes entfernt vom Bezugspunkt Ps befinden, so kann dies durch Hinzufügen einer festen Koordinatendifferenz berücksichtigt werden.)

Zur Vereinfachung soll nachfolgend von einem Polarkoordinatensystem ausgegangen werden, bei dem der Winkel α den Azimutwinkel und der Winkel β den Höhenwinkel bildet. Die Richtung des Vektors V zeigt dabei also auf die Gondel 1.2 des Windangriffselements 1. Es handelt sich hierbei gleichsam um ein "geographisches Koordinatensystem", da die Gondel 1.2 bzw. das Windangriffselement 1 sich im Wesentlichen auf der Oberfläche einer Kugel bewegen. Der Azimutwinkel α und Höhenwinkel β geben damit so etwas wie die geographische Länge und Breite der Position der Gondel auf der durch den Vektor V aufgespannten "Weltkugel". Die Länge des Vektors V gibt grob die Länge des Zugseils 1.1 an, wobei dessen Durchhang zunächst außer Betracht bleiben soll.

Die Gondel 1.2 des Windangriffselements ist nach einem eigenen Koordinatensystem mit den Richtungen xk, yk und zk ausgerichtet, wobei zk in die Richtung der Verlängerung des Vektors V weist. Die Drehung der Gondel 1.2 des Windangriffselements 1 um die Hochachse zk wird mit dem Gierwinkel (Yaw) bezeichnet. Durch eine Veränderung des Gierwinkels wird eine Änderung der Flugrichtung des Windangriffselements 1 bewirkt. Der Gierwinkel kann u. a. durch die aktive Ansteuerung von (weiter unten beschriebenen) Bremsklappen des das Windangriffselement 1 bildenden Gleitschirms verändert werden. Er bewirkt eine Richtungsänderung und dieser Vorgang ist mit dem Lenken eines Lenkdrachens vergleichbar. Eine Drehung um die Längsachse xk stellt eine Rollbewegung (Roll) dar und wird nicht aktiv gesteuert. Aus der Rollbewegung bzw. der entsprechenden Abweichung der Richtung von zk von V lässt sich der Durchhang des Zugseils 1.1 auf Grund der Schwerkraft ermitteln, während die Drehung um die Querachse yk die Neigung (Pitch) des Windangriffselements um die Querachse bildet und durch Böen und deren Einwirkung auf das Zugseil 1.1 hervorgerufen sein kann. Dieses Bezugssystem bildet die Basis für das Verständnis der Beschreibung des weiter unten beschriebenen Schiff-Drachen-Systems.

In Fig. 1b ist ein Ausführungsbeispiel eines erfindungsgemässen Windangriffselements schematisch dargestellt. Das Windangriffselement bildet bei der dargestellten Ausführungsform einen Gleitschirm 101 mit einem Behältnis 102 für die Steuerung, wie es weiter unten näher beschrieben werden wird. Von dem an dem Zugseil 1.1 befestigten Behältnis 102 gehen Halteleinen 103 aus, welche in Verzweigungen 104 in Form eines Leinenbaums übergehen, die mit einer unteren textilen Deckschicht 105 verbunden sind. Eine obere textile Deckschicht 106 bildet den Abschluss nach oben. Die beiden Deckschichten sind durch interne - in der Figur nicht sichtbare - Verbindungsleinen oder entsprechende Verbindungselemente, wie zum Beispiel Textilrippen, zusammengehalten, wobei das durch die beiden Deckschichten gebildete Tragflügelprofil durch einen internen Luftüberdruck stabilisiert wird, der sich über Öffnungen an der Drachenvorderkante (in der Zeichnung links) aufbaut, welche in der Zeichnung aus Gründen der Übersichtlichkeit ebenfalls fortgelassen sind. Die Flugrichtung ist mit dem Pfeil 107 gekennzeichnet.

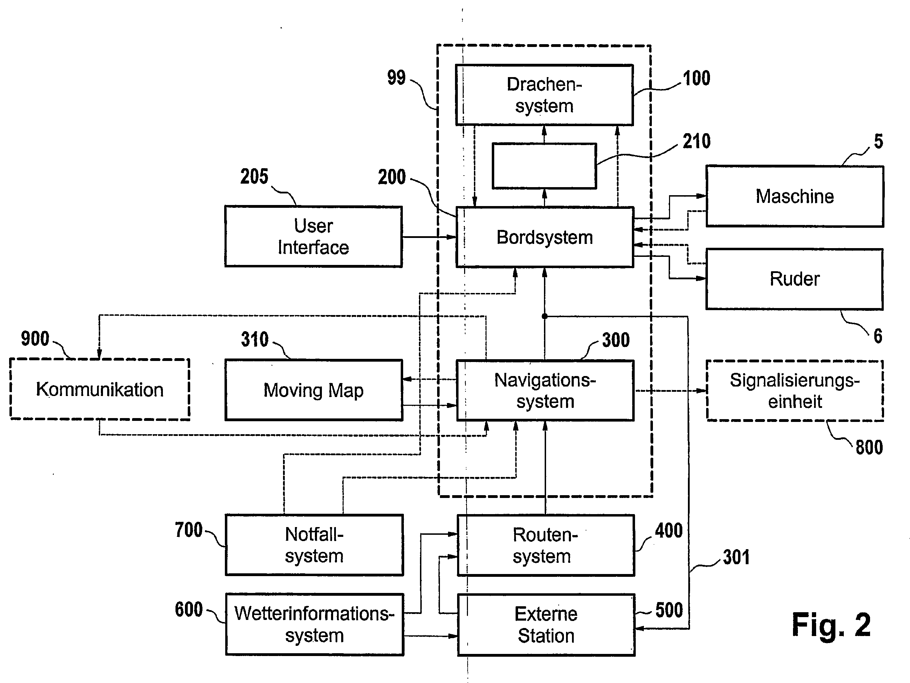

In Fig. 2 ist eine Prinzipdarstellung des erfindungsgemäßen Windantriebssystems als Blockschaltbild wiedergegeben. Das Bild dient auch zur Orientierung bei der nachfolgenden Beschreibung der einzelnen Systembestandteile. Die in der Übersichtsdarstellung verwendeten 100-ter-Bezugszeichen bilden auch die Gruppenbezeichnung der weiter unten jeweils detailliert dargestellten Systemteile. (Eine gestrichelte Linie 99 umgrenzt dabei diejenigen Baugruppen, welche mindestens einem konventionellen Schiff hinzugefügt werden müssen, damit es mit dem erfindungsgemäßen Windantrieb zusätzlich ausgestattet ist.) Das Windangriffssystem 100 umfasst das Windangriffselement sowie das dazugehörige Steuersystem, so weit es unmittelbar bei diesen angeordnet ist. Die Anordnung kann dabei sowohl in einer am Ende des Zugseils befindlichen Gondel, von der die Halteleinen ausgehen, angeordnet sein oder aber auch unmittelbar in das Windangriffselement eingearbeitet sein. Das Steuersystem umfasst im Wesentlichen einen Autopiloten, der die Lage- und Flugbahnsteuerung des Windangriffselements kontrolliert.

Das Windangriffssystem 100 ist über das Zugseil und eine Winsch 210 (einschließlich Zugseil) und gestrichelt dargestellte Kommunikationswege mit dem Bordsystem 200 verbunden mit einer Bedienoberfläche (User Interface) 205, welches ein Steuersystem umfasst, das sowohl die Drachenposition kontrolliert als auch an die Maschine 5 und das Ruder 6 des Schiffes die notwendigen Steuerbefehle abgibt. Mit dem Windangriffselement ist das Bordsystem über verschiedene Kommunikationswege verbunden, welche ermöglichen, sowohl die Drachenposition vom Bordsystem im Grundsatz vorzugeben als auch vom Windangriffssystem her Informationen zu empfangen, die für das Bordsystem von Bedeutung sind.

Dem Bordsystem 200 vorgeschaltet ist ein Navigationssystem 300, welches an das Bordsystem die einzuhaltenden Route des Schiffes unter Berücksichtigung von Kosten, Zeiten, Geschwindigkeit und Windausnutzung sowie gegebenenfalls die Windrichtung und Windstärke übermittelt. Zur Windinformationen kann auch eine Kennzeichnung gehören, welche die Böigkeit des Windes charakterisiert. Dazu können ferner noch Informationen betreffend den Seegang bzw. die daraus resultierende Schiffsbewegung kommen. (Die Wind- und Wetterdaten stammen dabei ursprünglich aus dem weiter unten dargestellten Wetterinformationssystem 600.) Das Navigationssystem wird unterstützt von dem navigatorischen Informationsfundus (Moving Map) 310.

Aus den Kurs-, Wind- und Welleninformationen werden Signale generiert, welche das Bordsystem 200 ansteuern und eine entsprechende Einstellung des Drachensystems 100 bewirken. Das Bordsystem 200 erzeugt weiterhin Ansteuersignale für die Maschine 5 und das Ruder 6.

Das Navigationssystem 300 wird von einem Routensystem 400 angesteuert, welches den Weg des Schiffes über die dem Schiffsbetrieb zu Grunde liegenden ökonomischen Basis ermittelt. Das Routensystem 400 wird auf der Basis von einer externen Station 500 vorgegebenen Daten angesteuert, welche mit den Daten eines Wetterinformationssystems 600 abgeglichen werden. Die von dem. Navigationssystem 300 aktuell ermittelten Kursdaten werden über eine Rückkopplungsverbindung 301 (über Funk, Satellit) an die externe Station 500 zurückgemeldet. Die Daten sind auch von anderen mit dem erfindungsgemäßen System ausgestatten Schiffen empfangbar und können zur lokalen Aktualisierung des Wettersystems verwendet werden. Auf diese Weise können aktuelle, lokal bedingte Kursänderungen bei der weiteren externen Routenvorgabe wie berücksichtigt werden.

Es ist ersichtlich, dass die Positionierung des Drachensystems 100 in Abhängigkeit von den Kursdaten so erfolgt, dass sowohl auf Grund der Wetterbedingungen (aktuell vorherrschenden Winde und Seegangsbedingungen) als auch unter Berücksichtigung der ökonomischen Grenzbedingungen, welche einen möglichst Kosten sparenden Schiffsbetrieb erbringen sollen, eine optimale Routenvorgabe erfolgt.

Ein Notfallsystem 700 gibt im Falle eines unvorhergesehenen Ereignisses, welches ein sofortiges Handeln in Form eines Notmanövers erzwingt, die erforderlichen Steuerbefehle.

In weiteren Blöcken 800 bzw. 900 sind jeweils das Signalisierungssystem und Kommunikationssystem zusammengefasst, welches die Navigation mit weiteren Verkehrsteilnehmern abstimmt. Zum Signalisierungssystem gehört eine Navigationssicherheitsbeleuchtung sowie die Aussendung von eigenen Navigationsdaten über Funk, welche andere in der Umgebung befindliche Schiffe über das gesetzte Windangriffssystem und die beabsichtigte Route bzw. den aktuellen Kurs informieren. Das Kommunikationssystem umfasst dagegen alle Systeme, welche den weiteren Informationsaustausch betreffen.

Die Hauptwege des Datenflusses sind in Fig. 2 als durchgezogene Linien dargestellt, während die übrigen Nachrichtenwege gestrichelt wiedergegeben sind.

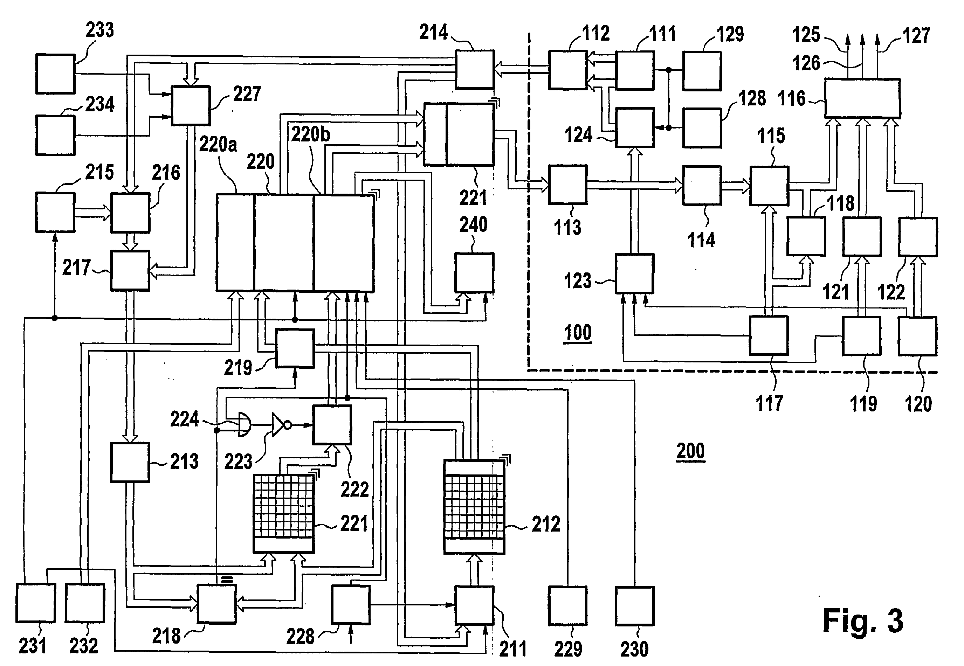

In Fig. 3 sind der Block 100, welcher das Windangriffssystem umfasst, sowie der Block 200 mit dem Bordsystem aus Fig. 2 näher dargestellt. Es wird hier die Positionierung und Steuerung des Drachens 101 beschrieben. Die Windrichtungs- und Windgeschwindigkeitsinformation, einschließlich Böigkeitskennwert sowie Seegangsinformationen gelangt in einen Zwischenspeicher 211, in dem diese Daten zur Pufferung festgehalten werden. Da sich die Windrichtung und alle Einstellungen des Drachens auf den scheinbaren Wind beziehen, ist die Kursinformation bei der Verarbeitung entbehrlich. Die Einstellung und das Manövrieren des Windangriffselements in Bezug auf das Schiff erfordert keine Kenntnis des aktuellen Kurses, da sich alle Manöver in Bezug auf das Schiff und unter Einwirkung des auf den Drachen einwirkenden scheinbaren Winds beziehen. Die Windinformationen stammen beim Setzen des Drachen 101 zunächst aus dem Wetterinformationssystem 600 in Figur 2, wenn es darum geht, den Drachen zu positionieren. Sobald dessen eigene Windmessung nach dem Start jedoch in Funktion ist, wird der scheinbare Wind am Ort des Windangriffselements selbst bestimmt, da dieser für die Positionierung bestimmend ist.

Die Wind- und Seegangsdaten bilden insgesamt einen Datensatz, welcher einen eine Nachschlagetabelle bildenden Speicher 212 für die Sollposition und den Manövertyp des Windangriffselements adressiert. Diese Nachschlagetabelle ist wie ein normaler adressierbarer Speicher organisiert, wobei die Ausgangsdaten des Zwischenspeichers 211 als Adressensignale die einzelnen Speicherplätze adressieren, bei denen die zu den adressierten Daten gehörigen Zustandsdaten des Windangriffselements abgelegt sind. Eine derartige. "Nachschlagetabelle" verknüpft nach Art eines "Nur-Lese-Speichers" (ROM) gemäß einem vorgegebenen funktionalen Zusammenhang die Eingangs- und Ausgangsdaten miteinander, lässt sich also als mathematische Zuordnung (Funktion) verstehen. Die entsprechenden Blöcke bilden jedoch nur eine beispielhafte Realisierung und können auch durch beliebige andere Funktionsglieder oder Baugruppen ersetzt werden. Hierbei kann es sich beispielsweise um einen Mikroprozessor handeln, bei dem die Steuerungssoftware in einem entsprechenden Speicher festgehalten ist oder aber auch um eine elektrische Schaltung, bei der der funktionale Zusammenhang nach Art eines Analogrechners durch die beteiligten elektrischen Komponenten festgelegt ist. Die Darstellung als Nachschlagetabelle ist hier der Übersichtlichkeit halber gewählt, weil eine Lösung mit einem Mikroprozessor beispielsweise nur deswegen unübersichtlicher darzustellen ist, weil die verschiedenen nacheinander abzuwickelnden Programmschritte aufwendige Überlegungen dahingehend erfordern, welche Programmteile dem Mikroprozessor nacheinander zuzuführen sind.

Bei der gewählten Ausführung können die Steuersignale parallel verarbeitet werden, wobei allerdings solche Schaltglieder, die eine Aktivierung der dargestellten Blöcke zu bestimmten Zeiten und die entsprechenden Regelungen bewirken, nicht dargestellt sind. Es wird der Einfachheit halber davon ausgegangen, dass ein eingehendes Steuersignal, welches von bisher anstehenden Signalzustand abweicht, die Verarbeitung in den nachfolgenden Blöcken auslöst, welche den betreffenden erreichten Zustand beibehalten, bis eine Signaländerung eine neue Verarbeitung erzwingt.

Die Zustandsdaten beinhalten also zum einen die Sollposition des Windangriffselements, d. h. seine Richtung in Bezug auf das Schiff und die auszubringende Länge des Zugseils. Darüber hinaus enthalten sie gegebenenfalls auch eine Informationen darüber, ob und wenn ja nach welchem abgespeicherten Programm der Drachen 101 manövriert werden soll. Während der Drachen in einigen Positionen statisch, d. h. feststehend geführt wird, ist es für den Schiffsbetrieb in bestimmten Fällen günstiger, wenn der Drachen dynamisch geführt wird, d. h. vorbestimmte Flugfiguren ausgeführt werden, da sich dadurch seine Relativgeschwindigkeit zum Wind und infolgedessen auch seine Zugleistung erhöht. In einem weiteren Speicher 213 wird die aktuelle Position des Drachens festgehalten, wie sie durch das Navigationssystem des Drachens 101 bestimmt wird.

Die im Speicher 213 festgehaltene Ist-Position des Drachens bezieht sich auf das Schiff und wird vorzugsweise durch Differenzbildung zweier GPS-Signale ermittelt. Hierbei handelt es sich zum einen um den GPS-Empfänger 124 des Drachens 101 innerhalb des Drachensystems 100, welches mit dem fliegenden Drachen 101 verbunden ist. Die in der Flugposition des Drachens 101 ermittelten Positionsdaten werden mittels eines Senders 112 an einen Empfänger 214 übermittelt, welcher sich an Bord des Schiffes befindet. Ein weiterer GPS-Empfänger 215 ist ebenfalls an Bord des Schiffes vorgesehen. Sein Ausgangssignal wird zusammen mit dem Ausgangssignal des Empfängers 214 einer Subtrahiereinheit 216 zugeführt, mit der das Differential-GPS-Signal erzeugt wird. In einem der Subtrahiereinheit 216 nachgeschalteten Block 217 werden die Differenz-Positionsdaten in Polarkoordinaten umgerechnet, welche sich auf den Abstand zwischen der Winsch 2 und in die Position des Windangriffselements beziehen. Es handelt sich um die Winkel α und β entsprechend Fig. 1a sowie die Seillänge "L". Die so erhaltenen Differential-GPS-Positionsdaten weisen eine große Genauigkeit auf, wenn sie gleichzeitig ermittelt werden und der GPS-Empfänger des Schiffes an einem Ort installiert ist, der möglichst wenig von Schiffsbewegungen betroffen ist bzw. wenn die Bewegungen kompensiert werden.

Weiterhin ist es dabei notwendig, die Koordinatendifferenz zwischen der Positionen der Winsch und des GPS-Empfänger des Schiffes durch Subtraktion eines festen Wertes zu berücksichtigen. Die durch den so gebildeten Differential-GPS-Empfänger ermittelte Position wird in Zeitabständen ermittelt. Falls sie in ihrer Präzision nicht ausreicht, kann sie durch Werte, die über Beschleunigungsaufnehmer 117, 119 und 120 ermittelt werden, gestützt werden. Die entsprechenden Berechnungen, die eine Integration enthalten, wird in der Baugruppe 123 ausgeführt. Da es sich innerhalb der Zeitintervalle, in denen integriert werden muss, lediglich um die Zeiten handelt, die bis zum nächsten GPS-Positions-Signal vergehen, brauchen die Integratoren keine Qualitätsanforderungen zu erfüllen, die eine Stabilität über lange Zeiträume garantieren würde. (Die Beschleunigungsaufnehmer dienen an sich zur Stabilisierung der Flugmanöver, wie es weiter unten beschrieben ist - erhalten somit also eine Zweitfunktion). Des weiteren sind noch ein Höhenmesser 129, vorzugsweise als Luftdruckmesser ausgeführt, und ein Erdmagnetfeldsensor 128 vorgesehen, deren Daten ebenfalls dem Speicher für das Navigationssignal 124 zugeführt werden.

Eine weitere Möglichkeit zur Ermittlung der Ist-Position des Windangriffselements in Relation zum Schiff ist die Nutzung der zum Schiff übertragenen Daten des Höhenmessers 129 und des Erdmagnetfeldsensors 128. Diese Daten werden auf dem Schiff in Block 227 übertragen und festgehalten. In Block 227 findet dann eine Differenzbildung mit den Daten des Höhenmessers 233 am Schiff und des Erdmagnetfeldsensors 234 am Schiff statt. Handelt es sich bei dem Höhenmesser 129 um einen Luftdruckmesser, können für die Bestimmung des Luftdrucks am Schiff aber auch Wetterdaten aus Block 600 (Isobaren) genutzt werden. Die so ermittelten Positionsinformationen werden Block 217 zugeführt und gegebenenfalls mit den GPS-Daten abgeglichen. Auf diese Weise stützen sich die Positionsinformationen zweier unabhängiger Systeme gegenseitig und bei Ausfall eines Systems stehen die benötigten Daten weiterhin zur Verfügung.

Die aus dem Speicher 212 ausgelesene Sollposition des Drachen wird nun einerseits einem Vergleicher 218 zugeführt, der einen Signal ausgibt, wenn die Ist-Position des Windangriffssystems 100, die in dem Speicher 213 vorhanden ist, mit der aus dem Speicher 212 ausgelesenen Sollposition übereinstimmt. In diesem Fall wird über eine Freigabeschaltung 219 ein den ausgewählten Manövertyp kennzeichnender Datensatz aus dem Manövertyp-Speicher 220 ausgelesen. (Dabei kann ein statischer Flugzustand sich aber auch dadurch auszeichnen, dass der Drachen keine Manöver ausführt, sondern seine Flugposition beibehält. Hierbei handelt es sich um den Manövertyp "Null".)

Bei Ansteuerung dieses Manövertypspeichers 220 wird also ein Flugprogramm vom sequenziellen Typ ausgelesen und an den Autopiloten des Windangriffssystems 100 übertragen. Das Ausgangssignal des Speichers 220 gelangt dabei an einen Sender 221, der die Daten emittiert und einem Empfänger 113 des Windangriffssystems 100 zuführt. Vom Ausgang des Empfängers 113 gelangt das Signal in eine Autopiloten-Baugruppe und dort in eine Manöversteuereinheit 114. Diese empfängt die für ein bestimmtes sequenzielles Flugmanöver kennzeichnenden Signale und setzt diese in Kurvenwerte um, die dem Flugprozessor 116 zugeleitet werden, welcher das betreffende Flugmanöver ausführt. Dabei wird der einzustellende Wert in einen Kurvenwertvergleicher 115 überführt, dem andererseits das Eingangssignal des Gierwertmessers 117 zugeführt wird. Der Flugprozessor 116 erzeugt jetzt an seinem betreffenden Ausgang 125 über ein entsprechendes Antriebselement am Drachen 101 durch unsymmetrisches Abbremsen des Drachens 101 oder einer entsprechenden aerodynamischen Verformung Kurvenflug in der vorgegebenen Folge und Dauer. Die anderen aerodynamischen Effekte, welche durch die beiden anderen Ausgänge des Flugprozessors 116 angesteuerte werden sind das Anstellen des Flügels und das Reffen, wie es weiter unten beschrieben wird.

Aus dem Speicher 220b für die Positionierung wird auch die Winsch 240 zum Fieren auf eine bestimmte Seil-Solllänge angesteuert.

Um ein Pendeln um die Hochachse zu vermeiden, wird zusätzlich ein durch einen Hochpass gefiltertes Signal dem Flugprozesser 116 mit versetzter Phasenlage dem Steuersignal überlagert zugeführt, so dass ein Aufschwingen vermieden ist. Während über den Ausgang 125 Gierbewegungen gesteuert werden können, wird über den Ausgang 126 das Anstellen des Tragflügels eingestellt. Bekanntlich lässt sich durch das Maß des Anstellens eines Flügels das Verhältnis von Flugwiderstand und Auftrieb optimieren. Über einen weiteren Ausgang 127 kann das Reffen des Drachens 101 eingeleitet werden. Ein Reffen verändert den Auftrieb und Widerstand und kann bei einzelnen Flugmanövern erforderlich sein.

Da der Drachen fest am Zugseil geführt ist, wird er durch die Zugwirkung des Seils in seinem Auftriebsschwerpunkt bezüglich seiner Roll- und Neigungsbewegungen automatisch stabilisiert. Um aber auch hier ein Schwingen auszuschließen, wird in entsprechender Weise jeweils ein Lagesignal von einem Rollgeber 119 und einem Neigungsgeber 120 über entsprechende invertierende Hochpassfilter 121 und 122 zum Flugprozessor übermittelt, so dass ruckartige Lageänderungen des Windangriffselements 101 vermieden und kompensiert werden.

Wenn der Drachen sich also in seiner vorgegebenen Position befindet (am Ausgang des Vergleichers 218 erscheint ein diesen Zustand kennzeichnendes Ausgangssignal), so wird der ausgewählte Manövertyp ausgelesen, welche den Drachen dazu veranlasst, ein vorgegebenes zyklisches Flugprogramm auszuführen. Ist dieser Manövertyp übertragen, erfolgt die Steuerung selbsttätig vom Autopiloten des Windangriffselements und die Einheit 200 braucht nicht mehr zu reagieren, sofern der Drachen nicht durch unvorhergesehene Ereignisse seine Sollposition verlässt.

Stimmt die Sollposition des Windangriffselements 101 nicht mit seiner vorgegebenen Position überein, sei es, dass sich die Vorgabeposition, welche aus dem Speicher 212 ausgelesen wird, verändert hat - was auch beim Setzen des Drachens der Fall ist -, oder sei es, dass der Drachen im Laufe des Manövrierens seine Position verlassen hat, so verschwindet das Ausgangssignal am Ausgang des Vergleiches 218, und der über das Schaltglied 219 aktivierte Manövertyp des Speichers 220 endet. Am Ausgang des Speichers für den Manövertyp 220 (linker Teil) erscheint das Signal "Null", was vom Autopiloten des Windangriffssystems 100 dahingehend interpretiert wird, dass das zuletzt eingespeicherte Manöver nicht mehr ausgeführt wird. Statt dessen wird die Ist-Position des Drachen, welche aus dem Speicher 213 ausgelesen wird und über GPS ermittelt wurde, mit der Soll-Position aus dem Speicher 212 mittels einer Positionskorrigiereinheit 221 verglichen und ein Manöver ermittelt, welches den Drachen in die Sollposition führt. Die Korrigiereinheit 221 ist wieder als Nachschlagetabelle ausgebildet, wobei die Soll- und die Ist-Position (wieder bezogen auf das Schiff) zu einem gemeinsamen Adressiersignal zusammengefasst werden und die Kennzeichnung eines entsprechenden Korrekturmanövers des Windangriffselements von der Ist-Position A in die Soll-Position B ausgelesen wird. Es ist nämlich zu beachten, dass je nach Start und Zielpunkt (und auch gegebenenfalls abhängig von den Wind- und Wellenbedingungen) unterschiedliche Manöver gewählt werden müssen, um den Drachen zu manövrieren. Mit den angegebenen Maßnahmen können aber beliebige Drachenmanöver ausgewählt und ausgeführt werden.

Spielen Wind- und Seegang bei den auszuführenden Manövern eine Rolle, so können diese Daten vom Speicher 211 durch die Nachschlagetabellenspeicher 212 und 221 "durchgeschleift" werden, so dass sie im Datensatz für die Auswahl eines spezifischen Manövers noch vorhanden sind und ein geeignetes Manöver ausgewählt werden kann. Hierbei geht es allerdings nicht um den Ausgleich einzelner Ereignisse, sondern um generelle Einstellungsrichtlinien, welche beispielsweise beinhalten können, dass bei hohem Seegang der Drachen relativ so geflogen wird, dass die durch die Wellenrichtung auf das Wasserfahrzeug wirkenden Kräfte möglichst kompensiert werden können. So wäre also bei stark krängendem Schiff eine Dracheposition mit Querkomponente und bei stark stampfendem Schiff eine Vorauskomponente zu bevorzugen. Aus diesem Grunde wird ein Ausgangssignal de Blocks 231 zur Erfassung des Seegangs direkt dem Block 211 zugeleitet, um eine Information zuzufügen, welche bei der Auswahl der entsprechenden Drachenposition und Manövrierung im oben beschriebenen Sinne mitwirkt. Eine weitere Funktion dieser Verbindung besteht darin, Teile von Flugmanövern so auszuwählen, dass sie den Beschleunigungen aufgrund des Seegangs entgegenwirken. Hierzu gehört, dass Manöver mit zyklischen Flugbahnen, bei denen unterschiedliche Zugkräfte am Zugseil zu unterschiedlichen Zeiten einwirken, so geflogen werden, dass diese Kräfte phasenversetzt zu den Beschleunigungen auftreten, welche durch den Seegang hervorgerufen werden. Auf diese Weise werden die Schiffsbewegungen insgesamt herabgesetzt. Diese Kompensation bzw. Herabsetzung von Schiffsbewegungen durch unterschiedliche Zugkräfte, welche durch das Manövrieren hervorgerufen werden, stören die übrigen angewandten Verfahren für die Seegangskompensation nicht. Dies hat seinen Grund darin, dass von vornherein reduzierte Schiffsbewegungen weniger Aufwand bei der Reduzierung von deren Auswirkungen auf die Drachenflugbahn erfordern. Wegen der Kompensation der einzelnen Schiffsbewegungen wird auf die Beschreibung des Blocks 231 weiter unten verwiesen.

Für den Positionswechsel wird der rechte Teil des Speichers 220 über ein Schaltglied 222 mit dem aus der Korrigiereinheit 221 ausgelesenen Datensatz adressiert, wobei das Schaltglied 222 vom Ausgangssignal des Vergleichers mittels eines Inverters 223 aktiviert wird, wenn das Schaltglied 219 nicht aktiviert ist, also Soll- und Ist-Position ungleich sind.

Des Weiteren kann auch die Flugstabilität des Windangriffselements für seine Position eine Rolle spielen. Ein am Drachen vorgesehener Mehrrichtungs-Staudruckmesser 111 bildet einerseits einen Windmesser und übermittelt andererseits für die in Flugrichtung gemessene Komponente den Zustand einer zu geringen Anströmung des Drachens durch ein entsprechendes Signal, welches zusammen mit der Erzeugung einer Positionswechselmanövers auch die Winschsteuerung 240 ansteuert, wodurch der Drachen bei dem Positionswechsel beschleunigt wird, so dass die Anströmung wieder heraufgesetzt wird. (Es ist ersichtlich, dass die Winsch auch bei "gewollten" Positionsänderungen aufgrund von Wind- und Wellendaten über den rechten Teil des Speichers 220b mit angesteuert werden kann, damit beispielsweise eine Änderung der Höhe des Windangriffselements herbeigeführt werden kann.)

Für die Ermittlung der wahren Windrichtung und Windgeschwindigkeit weist der Windmesser in unterschiedliche Richtungen gerichtete Staurohre mit Druckdosen auf, welche getrennt ausgewertet werden. Aus den Druckwerten der drei rechtwinklig zueinander gerichteten Druckdosen mit den höchsten Druckwerten lässt sich die Richtung und Geschwindigkeit des Windes in Bezug auf die Ausrichtung des Windmessers 111 bestimmen. Wird das Ausgangssignal des Magnetfeld-Sensors 128, der eine Brückenschaltung aus magnetisch empfindlichen Widerständen enthält und somit die Ermittlung der Richtung der Feldlinien des Erdmagnetfeldes ermöglicht, mit in Betracht gezogen, so kann die Richtung des Windes auf die Nordrichtung bezogen werden und kann somit als Richtung des scheinbaren Windes beim Windangriffselement zu Wasserfahrzeug hin übertragen werden. Dort erfolgt dann gegebenenfalls noch die Korrektur von magnetisch Nord zu geographisch Nord.

Ein zu dem Block 211 gerichteter Pfeil deutet an, dass dabei die normale Navigation des Drachens außer Funktion gesetzt wird. Über ein Oder-Gatter 224, das dem Inverter 223 vorgeschaltet ist, wird auch die übrige normale Manöversteuerung unterbunden. (Dies gilt entsprechend auch für die nachfolgend zu beschreibenden Blöcke 228, 229, 230 und 232, welche weitere Sonderfunktionen auslösen. Die zugehörigen Signalverbindungen, sind dort aber aus Gründen der Übersichtlichkeit weggelassen worden.)

Über den Block 228 wird das Notfallmanöver "Notabwurf" durch Auswahl und Start des zugehörigen Manövertyps über den rechten Teil des Manövertypspeichers 220b eingeleitet, der die jeweiligen Programmierungen enthält. Dieses Manöver wird notwendig, wenn vom Windangriffselement für das Schiff durch ungünstige Umstände oder einen Unfall eine große Gefahr ausgeht (z.B. durch Zusammenstoss mit einem Hindernis). Bei diesem Manöver wird das Windangriffselement vollständig vom Schiff getrennt.

Über die Blöcke "Setzen" 229 und "Bergen" 230 werden die entsprechenden Manöver durch Auswahl und Start des betreffenden Manövertyps über den rechten Teil des Manövertypspeichers 220b eingeleitet, der die jeweiligen Programmierungen enthält.

Über einen Block 231 "Schiffsbewegungen" wird über einen entsprechend ausgerichteten Beschleunigungsaufnehmer die in Richtung des Zugseils gerichtete Beschleunigungskomponente ermittelt und nach Integration ein Signal generiert, welches die Schiffsbewegungen in Richtung des Zugseils beschreibt. Dieses Signal wird dem Bord-GPS-Empfänger zugeführt, welcher ein für die Position der Winschsteuerung 240 korrigiertes Positions-Signal liefert, falls der Empfänger bzw. die Antenne nicht selbst in dieser Position montiert ist. Würde dieses GPS-Positionssignal unmittelbar zusammen mit dem über den Empfänger 214 empfangenen GPS-Positions-Signal des Drachensystems 100 ausgewertet und zu Führung des Drachens 101 verwendet, würde dieser in seiner Steuerung den Seegangsbewegungen der Winsch folgen. Da dieser aber seine Manöver in Bezug auf eine gedachte beruhigte Schiffsposition fliegen soll, wird das integrierte Signal des Beschleunigungsaufnehmers in Block 231 zusätzlich dem GPS-Empfänger 215 zugeführt, um (als Störung) von dem Signal subtrahiert zu werden, welches dem Block 216 zur Verarbeitung zugeführt wird, so dass dort das Positionssignal einer "beruhigten Plattform" verarbeitet wird. Auf diese Weise fliegt der Drachen 101 Manöver, die von Seegangsstörungen befreit sind. Es ist nämlich ersichtlich, dass sich hauptsächlich die in Zugseil-Richtung wirkenden Seegangs-Anteile für das Flugobjekt bemerkbar machen, wohingegen quer dazu gerichtete Anteile lediglich zu einer gerade bei langem Zugseil verschwindenden Änderung der Winkel α und β des Flugvektors beitragen und somit vernachlässigbar sind.

Um bei dem dargestellten Ausführungsbeispiel nicht permanent in die Situation zu kommen, bei starkem Seegang ein anstehendes Flugmanöver durch Feststellung einer Abweichung am Differenzblock 218 zu unterbrechen und einen gesteuerten "Flug" in die korrekte Position (in diesem Fall durch Aktivierung der Winsch 240 über den rechten Manöverblock 220b) ausführen zu müssen, besteht vom Block 231 eine Direktverbindung zur Winschsteuerung 240. Diese erhält unmittelbar den Befehl, entsprechend der Feststellung der Seegangsbewegung in Zugseilrichtung durch den Block 231 zu fieren und zu holen, so dass die Schiffsbewegungen für den Drachen unmittelbar ausgeglichen sind. Erst, wenn dieser Ausgleich aus irgendeinem Grunde nicht mehr ausreichend sein sollte, wird eine Positionskorrektur durch ein entsprechendes Manöver ausgelöst.

Um auch Manöver manuell auslösen zu können, sind über eine Bedienereingabe 232, welche Teil des Bedieneroberfläche 205 in Figur 2 ist, die entsprechenden Eingabebefehle möglich. Über entsprechende Befehle können in dem linken Teil 220a des Manöverspeichers für manuelle Befehle unter Unterdrückung der übrigen Signalausgabe aus diesem Speicher direkt Steuerbefehle an die Autopiloteneinheit und die Winschsteuerung 240 übermittelt werden. Hierbei handelt es sich um die Funktionen "Links", "Rechts", "Gerade", "Reffen", "Entreffen", "Anstellen (+)", "Anstellen (-)", "Winsch (+)" und "Winsch (-)". Alle Befehle können in ihrer Intensität moduliert werden.

Bei einer in der beschriebenen Ausführung eingeschlossenen Variante erfolgt, ein "vorausschauendes Manövrieren" in der Weise, dass in das System zur Berechnung der aktuellen Position des Windangriffselements fiktive Wind- und Kursdaten eingegeben werden und.die sich dann einstellende Konfiguration zur Information angezeigt wird. Hieraus kann dann die Schiffsführung das vorhersehbare Verhalten des Systems abschätzen und die Navigation entsprechend einstellen. Diese Mehrfachbearbeitung der Daten nach Art der Eventualvorausschau ist in Figur 3 durch Mehrfachwinkel an den Kanten verschiedener Speicherelemente dargestellt, was andeuten soll, dass die Inhalte dieser Speicher unabhängig von der aktuellen Prozesssteuerung mehrfach ausgewertet werden. Hierbei sind also zusätzliche Speichermittel und Vergleichermittel vorgesehen, welche eine Speicherung von vorangehenden Zeitpunkten zugeordneten Signalen mit zeitlich später erscheinenden Signalen in der Weise ermöglichen, dass zeitlich aufeinander folgende Manöverzustände unter Zugrundelegung verschiedener - auch fiktiver Eingangsdaten - vergleichbar sind.

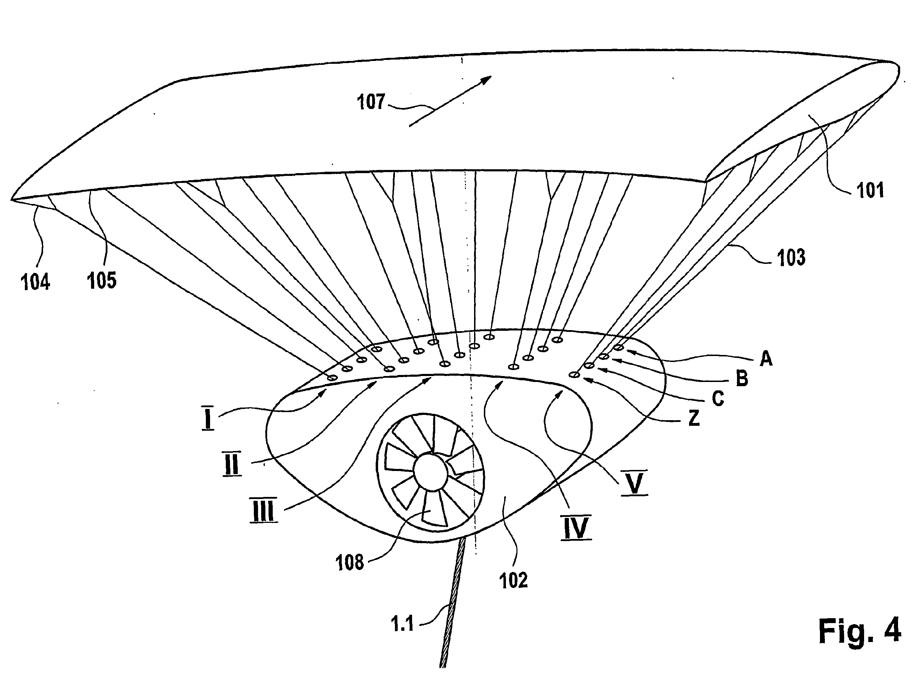

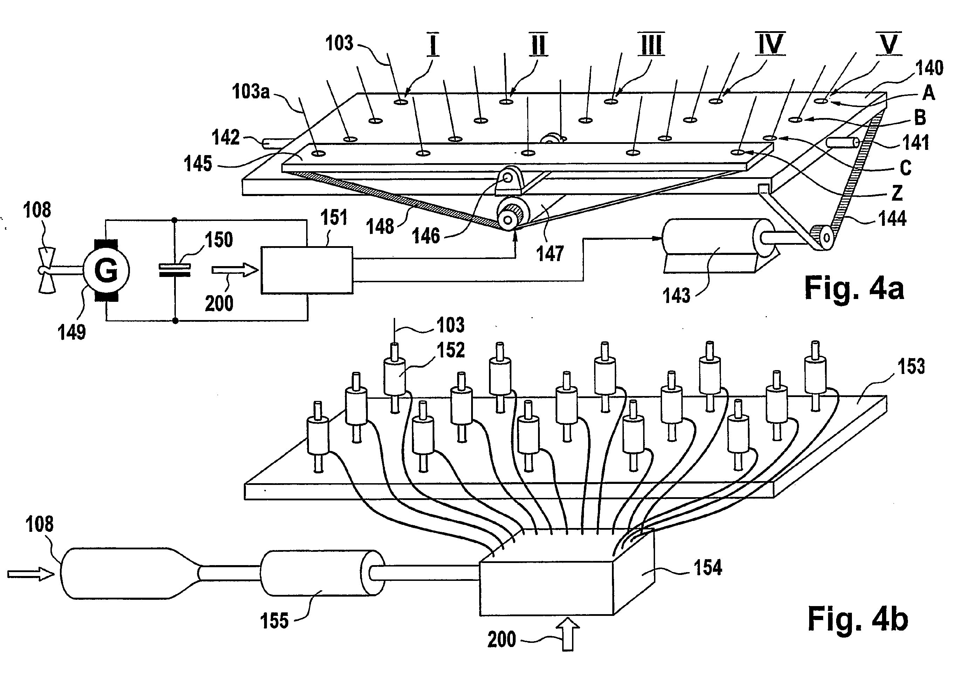

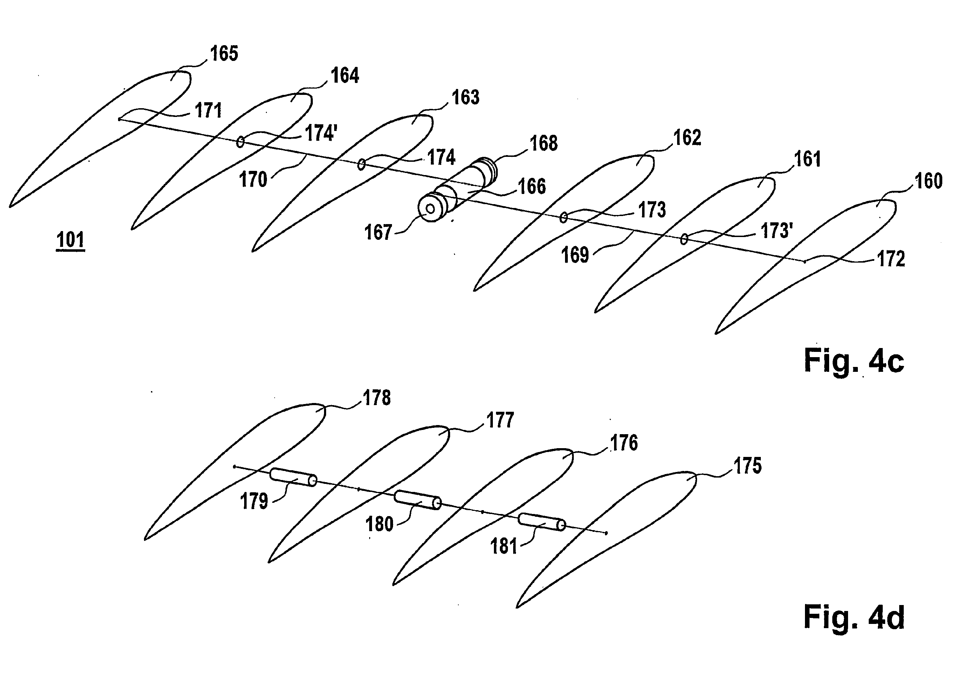

Die Steuerung des das Windangriffselement bildenden Gleitschirms ist in den Figuren 4 bis 4b näher dargestellt. Das in Fig. 4 dargestellte Windangriffselement 101 ist wiederum mit dem an dem Zugseil 1.1 befestigten stromlinienförmig ausgestalteten Behältnis 102 für die Steuerung verbunden. Die von dem Behältnis 102 ausgehenden Steuerleineh 103 sind in Form einer Punktmatrix angeordnet, wobei die Spalten der Matrix mit römischen Zahlen I bis V versehen sind und sich in Flugrichtung erstrecken. Die Zeilen sind mit Großbuchsstaben bezeichnet, welche in ihrer Folge entgegengesetzt zur Flugrichtung ausgerichtet sind. Von Bedeutung ist hierbei, dass die einzelnen Leinen, welche in Verzweigungen 104 in Form eines Leinenbaums übergehen, die mit einer unteren textilen Deckschicht 105 verbunden sind, einzeln oder in Gruppen verkürz- oder verlängerbar sind, um die aerodynamische Anpassung des Gleitschirms zu bewirken. Die Flugrichtung ist wieder mit dem Pfeil 107 bezeichnet.

Die matrixartig angeordneten Steuerleinen 103 enden in dem strömungsgünstig ausgestalteten Behältnis 102, welches in seiner Richtung nach vorne verrundet ist. Eine Windturbine 108 wird von der durch sie hindurch tretenden Luftströmung angetrieben und ist mit einem Generator verbunden, welcher die Umwandlung von Windenergie in die zum Betreiben der weiter unten zu beschreibenden Antriebselemente zur Einstellung der Steuerleinen 103 bewirkt. Hierbei können unterschiedliche Energiearten zur Anwendung kommen. Bevorzugt sind elektrische Energie und pneumatische Energie. Bei der Verwendung von pneumatischer Energie ist der Generator als Verdichter ausgeführt und stellt die Hilfsenergie unmittelbar zur Verfügung, wie an Hand der nachfolgenden Figuren beschrieben wird.

Fig. 4a gibt ein erstes Ausführungsbeispiel eines Steuermechanismus in schematischer Darstellung wieder. Es ist ersichtlich, dass auch hier die Steuerleinen 103 eine matrixartige Anordnung bilden, welche die Beeinflussung eines Drachens nach Art eines Gleitschirms erleichtert. Alle Steuerleinen 103 und 103a sind jeweils auf einer ersten Wippe 140 als gemeinsames Betätigungselement zusammengefasst angetrieben. Die Wippe ist in Achsstummeln 141 und 142 schwenkbar gelagert, wobei die Drehlager aus Gründen der Übersichtlichkeit in der Zeichnung fortgelassen wurden. Die Leinen bilden in ihrer Anordnung wieder Reihen A bis C und Z und Spalten I bis V. Ein erster elektrischer Getriebemotor 143 treibt die Wippe 140 über einen Zahnriemen 144 an, so dass die Leinenreihen A bis C und Z unter sich jeweils um identische Beträge bewegt werden. Da die Leinenreihen A und Z auf der Wippe außen gelegen sind, erhalten sie gemeinsam (allerdings gegensinnig) den größten Hub, währen die Leinenreihen B und C (entsprechend gegensinnig) jeweils nur um den halben Hub bewegt werden. Die hier beschriebene Betätigung entspricht einer Anstellung des Drachens entsprechend den geforderten aerodynamischen Gegebenheiten. Eine Betätigung der Wippe 140 bewirkt ein Anstellen des durch das Windangriffselement 101 gebildeten Tragflügels.

Auf der Wippe 140 ist eine weitere Wippe 145 in Querrichtung montiert, die um eine Achse 146 drehbar gelagert ist. Sie wird über einen zweiten elektrischen Getriebemotor 147 über einen Zahnriemen 148 angetrieben. Dabei werden die Leinen 103a auf der Wippe 145 ebenfalls gemeinsam - zusätzlich zu der von der Wippe 140 hervorgerufenen Antriebsbewegung - angetrieben. Jetzt ist es so, dass die außen liegenden, den Zeilen I und V angehörenden Leinen den (gegensinnig) größten Hub ausführen, während die Hübe der weiter innen gelegenen Leinen II und IV entsprechend geringer sind Die Leine III bleibt insoweit vollständig in Ruhe. Die durch die Wippe 145 angetriebenen Leinen der Spalte Z greifen an der Hinterkante des Drachens an und steuern die Flugrichtung (Gieren) entsprechend der Querruderbewegung eines Flugzeugs. Insgesamt ergibt sich im Bereich der Hinterseite des Drachens also eine Verwindung, welche die Bewegung um die Hochachse beeinflusst.

Es ist ersichtlich, dass der Antrieb der Leinen in Gruppen zur Verformung des Drachens - je nach gewünschtem Profil - auch in anderer Weise erfolgen kann. So können die Wippen beispielsweise zusätzlich geteilt und mit weiteren Antriebselementen versehen sein, so dass eine mehrfache Aufgliederung der Antriebsbewegungen möglich ist. So ein einseitiges Betätigen der Z-Leinen (Bremsen) oder eine zusätzliche asymmetrische Verformung des Windangriffselements dadurch, dass beispielsweise die Leinen der Gruppen I und V direkt angetrieben werden, während die Leinen der Gruppen II und IV einen durch Umlenkrollen und eine doppelte Leinenführung hervorgerufene Untersetzung (Flaschenzug - nicht dargestellt) einen geringeren Hub erhalten. Wenn eine Verlängerung des Leinenwegs erwünscht ist, kann ein Flaschenzug auch zur Übersetzung eingesetzt werden. Die Antriebsmotoren 143 und 147 sind bevorzugt als Schrittmotoren ausgebildet.

Die Energieerzeugung für die Motoren 143 und 147 erfolgt über die Windturbine 108, welche einen elektrischen Gleichspannungs-Generator 149 antreibt, welcher seinerseits einen Energiespeicher 150 (Akkumulator oder Hochkapazitätskondensator, insbesondere "Goldcap") auflädt. Die Energie wird einer Steuereinheit 151 zugeführt, welche den Elektromotoren 143 und 147 die notwendigen Antriebsspannungen (Impulse) zuleitet. Die Steuereinheit 151 erhält ihre Steuerbefehle ihrerseits von zuvor beschriebenen Autopiloteneinheit 114.

Es ist ersichtlich, dass sich durch die gezeigte Art des gemeinsamen Antriebs die Zahl der Antriebselemente verringert. Das gemeinsam angetriebene Betätigungselement kann dabei auch in einem anders ausgestalteten drehbar gelagerten Element, einer Wippe, einem Hebel oder dergl. bestehen, welches gemeinsam über einen Antriebsmotor bewegt wird. Die einzelnen Steuerleinen sind über die Verzweigungen zu unterschiedlich gewählten Befestigungspunkten an der unteren Bahn des Gleitschirms befestigt. Auf diese Weise setzt sich dann die Bewegung des Betätigungselements in die gewünschte Geometrieveränderung des gesamten oder von Teilen des Windangriffselements um zwecks Erzeugung der für die gewünschten Antriebs - oder Manövrierbewegung notwendigen Veränderung der aerodynamischen Form. Hierbei kann durch entsprechende Anordnung der Steuerleinen beispielsweise auch die Dicke des Drachenprofils eines zweifoligen Gleitschirms verändert werden. In diesem Fall würde jede zweite Zugleine durch die untere Deckfläche unverbunden hindurch gelangen, um an der oberen Deckfläche befestigt zu werden. Sie sind verkürzbar, während die übrigen Leinen fest mit der unteren Deckfläche zu verbinden sind und ihre Länge beibehalten.

Bei einer anderen in Fig. 4b dargestellten Ausführung der Steuerung des erfindungsgemäßen Windangriffselements bestehen die Antriebselemente aus linearen Aktoren, wobei jeder lineare Aktor durch ein pneumatisches Element 152 gebildet wird, welches sich unter Überdruck in Querrichtung ausdehnt und dadurch in seiner Länge verkürzt. Derartige Elemente werden "künstlicher Muskel" genannt und pneumatisch angetrieben. Jedes pneumatische Element 152 ist mit einer Leine 103 verbunden (in Fig. 4b beispielsweise gezeichnet) Bei der in dieser Figur dargestellten Ausführungsform steht die Grundfläche 153 fest und die einzelnen Aktoren 152 werden übe eine Dosiereinheit 154 jeweils mit der notwendigen Menge Druckluft angesteuert, um Leinenauslenkungen entsprechend dem Ausführungsbeispiel gemäß.Fig. 4a zu erzeugen.

Die Aktoren werden als "künstliche Muskeln" mit Luft gefüllt und kontrahieren dabei aufgrund ihrer Beschaffenheit. Diese lässt sich beispielsweise erreichen, wenn man die flexible Umhüllung mit einer Art Maschendrahtgewebe umgibt, welches sich bei Dehnung in einer Richtung in der senkrecht dazu stehenden Achsenrichtung zusammenzieht. Die Dosiereinheit 154 wird ebenfalls von den Ausgangssignalen des später zu beschreibenden Autopiloten angesteuert. Die notwendige Druckluftenergie wird bei dem dargestellten Ausführungsbeispiel aus der Windturbine 108 gewonnen, der ein Luftverdichter 155 nachgeschaltet ist. Dieser Luftverdichter 155 kann beispielsweise als Axialverdichter (Flugzeugturbine) oder aber als Radialverdichter (Turbolader) aufgebaut sein.

Zwei Ausführungsbeispiele von Reffeinrichtungen sind in den Figuren 4c und d dargestellt, wobei Fig. 4c eine schematische Darstellung des mechanischen Prinzips eines Ausführungsbeispiels einer Reffeinrichtung mit elektrischer Winsch und Fig. 4d ein Ausführungsbeispiel mit pneumatischen Aktoren wiedergibt. Bei dem in Fig. 4c dargestellten Ausführungsbeispiel sind Textilstege 160 bis 165 wiedergegeben, welche die Profil bildende Struktur für das Windangriffselement 101 bilden. Die Deckflächen sind in der schematischen Darstellung weggelassen. Ein elektrischer Servomotor 166 ist als Schrittmotor ausgebildet und trägt an den Enden seiner Antriebswelle zwei Wickelscheiben 167 und 168. Sie wickeln gegensinnig zwei Zugleinen 169 und 170 auf, welche an Befestigungspunkten 171 und 172 mit den Stegen 160 bzw. 165 verbunden sind. Wird der Motor 166 aktiviert, so verkürzt er die Zugleinen und zieht die Stege 160 und 165 heran. Bei den übrigen Stegen 161 bis 164 sind die Zugleinen 169 und 170 durch Aussparungen 173, 173' und 174, 174' geführt, so dass diese nur über die sich auffaltenden Deckschichten des Flügels geführt werden, wenn dieser gerefft wird. Eine Teilreffung ist durch teilweises Anziehen der Leinen 169 und 170 möglich. Das Entreffen erfolgt durch Aktivieren des Servomotors 166 in Gegenrichtung, wobei das als Gleitschirm ausgebildete Windangriffselement 101 (vgl. Fig. 2) durch seine gewölbte Form und die Zugkraft der Leinen ohne zusätzliche Betätigungskraft wieder den entrefften Zustand einnimmt. Die Antriebswelle mit den beiden Wickelscheiben 167 und 168 muss nicht, wie dies in Figur 4c) schematisch dargestellt ist, zwischen den Textilstegen 162 und 163, also innerhalb des Tragflügelprofils, angeordnet sein. Sie kann auch vorteilhafterweise in dem Behältnis 102 angeordnet sein, zu der dann die Zugleinen 169 und 170 geführt werden. Andererseits können diese Zugleinen aber auch an dem Behältnis 102 vorbeigeführt werden.

Bei dem anderen in Fig. 4d dargestellten Ausführungsbeispiel, das entsprechend schematisiert wiedergegeben ist, sind spantenartige Stege 175 bis 178 mit pneumatischen Aktoren 179 bis 181 - wie sie entsprechend in dem in Fig. 4b dargestellten Ausführungsbeispiel verwendet werden - vorgesehen, um den Abstand zwischen den Stegen durch Zug zu verringern und damit ein Reffen zu bewirken. Die Enden der Aktoren sind jeweils mit zwei benachbarten Stegen fest verbunden. Ein Entreffen kann hier auch aktiv durch ein gegensinniges Betätigen der Aktoren 179 bis 181 erfolgen.

Ein weiteres - nicht dargestelltes - Ausführungsbeispiel bezieht sich auf eine Anwendung zur Energiegewinnung, wobei ein durch die Strömung des Wassers, insbesondere über eine Schiffsschraube oder Turbine, angetriebener Generator vorgesehen ist, welcher die erzeugte elektrische Energie einem Energiespeicher, insbesondere einem Wasserstoffgenerator zuführt. Hierbei kann es sich also um Einheiten handeln, welche ausschließlich zum Zwecke der Energiegewinnung windreiche Gebiete der Erde befahren, um aus der erzeugten elektrischen Energie Wasserstoff durch elektrolytische Spaltung von Wasser zu generieren, welcher dann in entsprechenden Tanks mitgeführt und in dazu angelaufenen Häfen entladen oder auf See an ein entsprechendes Transportschiff übergeben wird.

Im Hinblick auf Details einzelner Elemente des Ausführungsbeispiels wird auch auf die gleichzeitig eingereichten parallelen Patentanmeldungen derselben Anmelderin verwiesen.

Die Erfindung ist nicht an die dargestellten Ausführungsbeispiele gebunden. Andere im Bereich der Erfindung liegende Konfigurationen ergeben sich aus Kombinationen von Unteransprüchen, welche sich dem Fachmann aufgrund der vorliegenden Beschreibung erschließen.

## Patentansprüche

1. Wasserfahrzeug mit Windantrieb, bei dem ein frei ausfliegendes drachenartiges Windangriffselement (1) mit einem Tragflächenprofil als ausschließlicher, als Hilfs- oder als Not-Antrieb nur über ein, sich gegebenenfalls in eine Anzahl von Halteseilen auffächerndes, Zugseil (1.1) mit dem Fahrzeug (4) verbunden ist, bei dem das Windangriffselement (1) über mindestens ein bei oder im dem Windangriffselement vorgesehenes mit diesem in Wirkverbindung stehendes aktives Antriebselement (140, 145, 152) durch Veränderung seiner aerodynamischen Wirkung zum Führen in eine und Halten in einer vorgegebene(n) Position in Bezug auf das Wasserfahrzeug (4) und/oder zum dynamischen Manövrieren, insbesondere auf vorgegebenen Flugbahnen, veränderbar ist, **dadurch gekennzeichnet, dass** mehrere Steuerleinen (103) eine matrixartige Anordnung bilden, wobei verschiedene Steuerleinen (103) über ein gemeinsam angetriebenes Betätigungselement (140, 145) zusammengefasst angetrieben werden, und die einzelnen Steuerleinen (103) gegebenenfalls durch unterschiedlich gewählte Befestigungspunkte und/oder unterschiedlich gewählte Unter- bzw. Übersetzungen in verschiedenen Hüben angetrieben werden.

2. Wasserfahrzeug nach Anspruch 1, **dadurch gekennzeichnet, dass** dem aktiven Antriebselement (140, 145, 152) Hilfsenergie aus einem Speicher am Ort des Antriebselements zuführbar ist.

3. Wasserfahrzeug nach Anspruch 1 oder 2, **dadurch gekennzeichnet, dass** Mittel zur Veränderung der aerodynamischen Wirkung des Windangriffselements (1) durch Änderung seiner Ausrichtung, Anstellung und/oder Form vorgesehen sind.

4. Wasserfahrzeug nach einem der Ansprüche 1 bis 3, **dadurch gekennzeichnet, dass** Mittel zur Veränderung der aerodynamischen Wirkung des Windangriffselements (1) Mittel zur Änderung der Form durch eine symmetrische oder unsymmetrische Änderung des Tragflächenprofils über eine Beeinflussung der Ausrichtung seiner Strömungsabrisskante, durch Verwindung des Tragflächenprofils, durch symmetrische und/oder durch unsymmetrische Änderung der Wölbung des Tragflächenprofils und/oder Reffen und/oder durch Änderung des Angriffspunkts des Zugseils in Bezug auf die Geometrie des Tragflächenprofils und/oder eine Änderung des Anstellwinkels des Tragflächenprofils einschließen, wobei die Mittel zur Änderung der Form bei einem zweilagigen Tragflächenprofil Mittel zur Veränderung des Abstands zwischen den beiden Lagen (105, 106) einschließen.

5. Wasserfahrzeug nach Anspruch 3 oder 4, **dadurch gekennzeichnet, dass** die Mittel zur beidseitigen und/oder gegensinnigen Betätigung bzw. zur gleichsinnigen bzw. unsymmetrischen Änderung des Tragflächenprofils ein gemeinsames Antriebselement (140, 145) aufweisen.

6. Wasserfahrzeug nach einem der Ansprüche 3 bis 5, **dadurch gekennzeichnet, dass** bei einem mindestens teilweise aus textilem oder sonstigem flexiblem Material bestehenden Windangriffselement (1) die Mittel zur Veränderung der aerodynamischen Wirkung eine Vorrichtung zum Verstellen, vorzugsweise durch Verlängern oder Verkürzen von mindestens einer Steuerleine (103), mittels des Antriebselements aufweisen, wobei die Steuerleine (103) insbesondere mindestens eine Umlenkung oder Rückführung in Form eines über- oder untersetzend wirkenden Flaschenzugs aufweist.

7. Wasserfahrzeug nach einem der Ansprüche 1 bis 6, **dadurch gekennzeichnet, dass** das Antriebselement aus einer Winsch und/oder einem linearen Aktor (152) besteht, die insbesondere mit einem Druckmedium betreibbar ist, wobei der lineare Aktor (152) insbesondere als ein pneumatisches sich unter Überdruck in der Länge reduzierendes Element ausgebildet ist.

8. Wasserfahrzeug nach einem der Ansprüche 1 bis 7, **dadurch gekennzeichnet, dass** Mittel vorgesehen sind, um ein Steuersignal für das Antriebselement (140, 145, 152) mindestens mittelbar aus einem die Windrichtung und/oder die Windgeschwindigkeit charakterisierenden Signal, und gegebenenfalls einem den Seegang charakterisierenden Signal zu ermitteln, wobei das die Windrichtung und/oder die Windgeschwindigkeit charakterisierende Signal und gegebenenfalls das den Seegang charakterisierende Signal durch einen entsprechenden Sensor ermittelt wird bzw. werden und es sich bei der Windrichtung und/oder die Windgeschwindigkeit um die Windrichtung bzw. die Windgeschwindigkeit des scheinbaren Windes handelt, welche vorzugsweise unmittelbar beim Windangriffselement ermittelt wird bzw. werden.

9. Wasserfahrzeug nach Anspruch 8, **dadurch gekennzeichnet, dass** den jeweiligen Sensoren eine Prozessor- oder Logikeinheit nachgeschaltet ist, welche aus den Signalen der jeweiligen Sensoren in fester oder variabler Zuordnung ein Positions-, Ausrichtungs- und/oder Manöversignal für das Windangriffselement (1) erzeugt, welches mindestens mittelbar das Steuersignal für das Antriebselement (140, 145, 152) bildet.

10. Wasserfahrzeug nach Anspruch 8 oder 9, **dadurch gekennzeichnet, dass** mindestens ein Positions-Sensorelement unmittelbar bei dem Windangriffselement (1) vorgesehen ist, welches ein Ausgangssignal mit Bezug auf dessen Position und/oder Ausrichtung im Raum abgibt, wobei dieses Ausgangssignale einem ersten Eingang einer Differenzbildungsvorrichtung zugeführt wird, deren anderem Eingang das Positions- Ausrichtungs- und/oder Manöversignal zugeführt wird, und am Ausgang der Differenzbildungsvorrichtung ein Richtungs- und/oder Korrektursignal erhältlich ist, welches mindestens mittelbar ein Steuersignal für das Antriebselement (140, 145, 152) bildet.

11. Wasserfahrzeug nach Anspruch 10, **dadurch gekennzeichnet, dass** es sich bei dem Positionssensor um ein Differential-GPS oder ein anderes Navigationsgerät handelt, welches gegebenenfalls unter Hinzuziehung eines zusätzlichen Beschleunigungssensor- und/oder Erdmagnetfeldsensorsignals eine Information über die Position und/oder Ausrichtung des Windangriffselements (1) erzeugt.

12. Wasserfahrzeug nach einem der Ansprüche 1 bis 11, **dadurch gekennzeichnet; dass** zur Positionsbestimmung des Windangriffselements Höhenmesser am Schiff (4) und am Windangriffselement (1) vorgesehen sind.

13. Wasserfahrzeug nach einem der Ansprüche 1 bis 12, **dadurch gekennzeichnet, dass** zur Positionsbestimmung des Windangriffselements (1) die Länge und Ausrichtung des Zugseils (1.1) verwendet wird.

14. Wasserfahrzeug insbesondere nach einem der Ansprüche 8 bis 13, **dadurch gekennzeichnet, dass** Mittel vorgesehen sind, um eine, insbesondere durch einen Beschleunigungssensor, vorzugsweise in Richtung des Zugseils wirksame Komponente der Wellenbewegung des Wasserfahrzeugs (4) zur Herabsetzung der Bewegung des Windangriffselements (1) in der Weise heranzuziehen, dass entweder die Positionsbestimmung.mittels Differential-GPS um die Schiffsbewegung in Richtung des Zugseils kompensiert wird, so dass sich das GPS-Signal auf eine "beruhigte Plattform" bezieht, und/oder dass die Winsch (2) entsprechend phasenversetzt angesteuert wird.

15. Wasserfahrzeug nach einem der Anspruch 10, **dadurch gekennzeichnet, dass** das Richtungs- und/oder Korrektursignal das Eingangssignal einer Selbststeuervorrichtung bilden, mit dessen Ausgang der Eingang des Antriebselements (140, 145, 152) verbunden ist.

16. Wasserfahrzeug nach einem der Anspruch 10, **dadurch gekennzeichnet, dass** der Selbststeuervorrichtung das Ausgangssignal eines Beschleunigungssensors und/oder Erdmagnetfeldsensors als weiteres Korrektursignal zugeführt wird.

17. Wasserfahrzeug nach einem der Ansprüche 8 bis 16, **dadurch gekennzeichnet, dass** die Sensoren und Signalverarbeitungsmittel jeweils zum einen Teil an Bord des Wasserfahrzeugs (4) und zum anderen bei dem Windangriffselement (1) vorgesehen sind und Signalübertragungsmittel vorgesehen sind, und dass Signalübertragungsmittel vorgesehen sind, um den Signalaustausch zwischen den beiden Gruppen von Sensoren und Signalverarbeitungsmitteln zu bewirken.

18. Wasserfahrzeug nach einem der Ansprüche 8 bis 17, **dadurch gekennzeichnet**, die Positions- und Ausrichtungssignale sich auf die Position des Windangriffselements (1) zum Wasserfahrzeug (4) bzw. auf die Erdoberfläche beziehen.

19. Wasserfahrzeug nach Anspruch 8 bis 18, **dadurch gekennzeichnet, dass** das Sensorelement als Fühler für einen bevorstehenden oder bereits eingetretenen Strömungsabriss ausgebildet ist, der aus einem im Bereich der umströmten Oberfläche des Windangriffselements (1) vorgesehenen Element besteht, welches bei anliegender Luftströmung ein Ausgangssignal abgibt.

20. Wasserfahrzeug nach einem der Ansprüche 1 bis 19, **dadurch gekennzeichnet, dass** das Antriebselement (140, 145, 152) und/oder das Sensorelement in einem, insbesondere stromlinienförmig ausgebildeten, Behältnis (102) vorgesehen ist, welches den Kraftangriffspunkt für das Zugseil (1.1) bildet und von dem Halte- und Steuerleinen (103) ausgehen, mit denen das Windangriffselement (101) verbunden ist.

21. Wasserfahrzeug nach Anspruch 20, **dadurch gekennzeichnet, dass** das Behältnis (102) tropfenartig ausgebildet ist.

22. Wasserfahrzeug nach Anspruch 20, **dadurch gekennzeichnet, dass** das Behältnis (102) als Tragflügelprofil ausgebildet ist und vorzugsweise in Richtung des Zugseils (1.1) oder orthogonal dazu orientiert ist.

23. Wasserfahrzeug nach einem der Ansprüche 1 bis 22, **dadurch gekennzeichnet, dass** zur Energiegewinnung ein durch die Strömung des Wassers außerhalb des Wasserfahrzeugs (4), insbesondere über eine Schiffsschraube oder Turbine, angetriebener Generator vorgesehen ist, welcher die erzeugte elektrische Energie einem Energiespeicher, insbesondere einem Wasserstoffgenerator mit nachgeordnetem Aufbewahrungsbehältnis zuführt.

## Claims

1. Watercraft with wind propulsion, in which a freely flying kite-like element (1) on which wind acts and with a wing profile as an exclusive, auxiliary or emergency propulsion system, is connected to the vessel (4) only via a hawser (1.1) which may spread out into a number of holding cables, in which the element (1) on which wind acts can be varied via at least one active drive element (140, 145, 152), which is provided close to or in the element on which wind acts and is operatively connected to it, by variation of its aerodynamic effect for guidance to and holding in a predetermined position with respect to the watercraft (4) and/or for dynamic maneuvering, in particular on predetermined flight paths, **characterized in that** a plurality of control lines (103) form a matrix-like arrangement, with different control lines (103) being driven in a combined form via a jointly driven operating element (140, 145), and with the individual control lines (103) possibly being driven with different linear movements by means of differently chosen attachment points and/or differently chosen step-down or step-up ratios.

2. Watercraft according to Claim 1, **characterized in that** the active drive element (140, 145, 152) can be supplied with auxiliary energy from a store at the location of the drive element.

3. Watercraft according to Claim 1 or 2, **characterized in that** means are provided for variation of the aerodynamic effect of the element (1) on which wind acts, by variation of its alignment, attitude and/or shape.

4. Watercraft according to one of Claims 1 to 3, **characterized in that** means for variation of the aerodynamic effect of the element (1) on which wind acts include means for variation of the shape by symmetrical or asymmetric variation of the wing profile by influencing the alignment of its flow-separation edge, by twisting of the wing profile, by symmetrical and/or by asymmetric variation of the curvature of the wing profile and/or by reefing and/or by variation of the point of attachment of the hawser with respect to the geometry of the wing profile and/or variation of the attitude angle of the wing profile, with the means for variation of the shape in the case of a two-layer wing profile including means for variation of the distance between the two layers (105, 106).

5. Watercraft according to Claim 3 or 4, **characterized in that** the means for operation on both sides and/or for operation in opposite senses, and for variation of the wing profile in the same sense or asymmetrically have a common drive element (140, 145).

6. Watercraft according to one of Claims 3 to 5, **characterized in that**, in the case of an element (1) on which wind acts which is composed at least partially of textile or other flexible material, the means for variation of the aerodynamic effect have an apparatus for adjustment, preferably for lengthening or shortening, of at least one control line (103), by means of the drive element, with the control line (103) in particular having at least one bend or feedback area in the form of a pulley block with a step-up or step-down effect.

7. Watercraft according to one of Claims 1 to 6, **characterized in that** the drive element comprises a winch and/or a linear actuator (152) which, in particular, can be driven by a pressure medium, with the linear actuator (152) in particular being in the form of a pneumatic element whose length is reduced when subject to increased pressure.

8. Watercraft according to one of Claims 1 to 7, **characterized in that** means are provided in order to determine a control signal for the drive element (140, 145, 152) at least indirectly from a signal which characterizes the wind direction and/or the wind speed, and possibly to determine a signal which characterizes the sea state, with the signal which characterizes the wind direction and/or the wind speed and possibly the signal which characterizes the sea state being determined by an appropriate sensor, and with the wind direction and/or the wind speed respectively being the wind direction and/or the wind speed of the apparent wind, which are/is preferably determined directly at the element on which wind acts.

9. Watercraft according to Claim 8, **characterized in that** the respective sensors are followed by a processor or logic unit which uses the signals from the respective sensors, associated in a fixed or variable manner, to produce a position, alignment and/or maneuver signal for the element (1) on which wind acts, which signal at least indirectly forms the control signal for the drive element (140, 145, 152).

10. Watercraft according to Claim 8 or 9, **characterized in that** at least one position sensor element is provided directly at the element (1) on which wind acts, and emits an output signal with respect to its position and/or alignment in three dimensions, with this output signal being supplied to a first input of a subtraction apparatus, to whose other input the position, alignment and/or maneuver signal is supplied, and with a direction and/or correction signal, which at least indirectly forms a control signal for the drive element (140, 145, 152), being available at the output of the subtraction apparatus.

11. Watercraft according to Claim 10, **characterized in that** the position sensor is a differential GPS or some other navigation appliance which, possibly with the addition of an additional acceleration sensor and/or earth's magnetic field sensor signal, produces information about the position and/or alignment of the element (1) on which wind acts.

12. Watercraft according to one of Claims 1 to 11, **characterized in that** altimeters are provided on the vessel (4) and on the element (1) on which wind acts, in order to determine the position of the element on which wind acts.

13. Watercraft according to one of Claims 1 to 12, **characterized in that** the length and alignment of the hawser (1.1) are used to determine the position of the element (1) on which wind acts.

14. A watercraft in particular according to one of Claims 8 to 13, **characterized in that** means are provided in order to use a component (which preferably acts in the direction of the hawser, in particular by means of an acceleration sensor) of the wave movement of the watercraft (4) to reduce the movement of the element (1) on which wind acts in such a manner that either the determination of the position by means of differential GPS is compensated for the vessel movement in the direction of the hawser, so that the GPS signal relates to a "stabilized platform" and/or in such a manner that the winch (2) is driven with an appropriate phase shift.

15. Watercraft according to Claim 10, **characterized in that** the direction and/or correction signal form/forms the input signal to an autopilot apparatus, to whose output the input of the drive element (140, 145, 152) is connected.

16. Watercraft according to Claim 10, **characterized in that** the autopilot apparatus is supplied with the output signal from an acceleration sensor and/or earth's magnetic field sensor as a further correction signal.

17. Watercraft according to one of Claims 8 to 16, **characterized in that** the sensors and signal processing means are each provided partially on board the watercraft (4) and partially at the element (1) on which wind acts, and signal transmission means are provided, and **in that** signal transmission means are provided in order to provide the signal interchange between the two groups of sensors and signal processing means.

18. Watercraft according to one of Claims 8 to 17, **characterized in that** the position and alignment signals relate to the position of the element (1) on which wind acts with respect to the watercraft (4) or to the earth's surface.

19. Watercraft according to Claim 8 to 18, **characterized in that** the sensor element is in the form of a sensor for imminent flow separation or for flow separation that has already occurred and comprises an element which is provided in the area of the surface of the element (1) on which wind acts around which the flow passes, with the element emitting an output signal when airflow is present.

20. Watercraft according to one of Claims 1 to 19, **characterized in that** the drive element (140, 145, 152) and/or the sensor element are/is provided in a container (102) which, in particular, is designed to be streamlined and forms the point at which force acts for the hawser (1.1), and from which holding and control lines (103) originate, to which the element (101) on which wind acts is connected.

21. Watercraft according to Claim 20, **characterized in that** the container (102) is droplet-shaped.

22. Watercraft according to Claim 20, **characterized in that** the container (102) is in the form of a wing profile and is preferably oriented in the direction of the hawser (1.1), or at right angles to it.

23. Watercraft according to one of Claims 1 to 22, **characterized in that** a generator is provided in order to obtain energy, which is driven by the flow of the water outside the watercraft (4), in particular via a vessel propeller or turbine and supplies the electrical energy that is generated to an energy store, in particular to a hydrogen generator with a downstream storage container.

## Revendications

1. Véhicule nautique à propulsion éolienne, dans lequel au moins un élément exposé au vent (1) à vol libre, du type cerf-volant, avec un profil de surface portante, sous la forme d'un seul système de propulsion, sous la forme d'un système de propulsion auxiliaire ou sous la forme d'un système de propulsion de secours, est relié au véhicule nautique (4) uniquement par l'intermédiaire d'un câble de traction (1.1) qui se déploie éventuellement en un nombre donné de câbles de retenue, dans lequel au moins un élément de commande (140, 145, 152) actif, prévu sur ou dans l'élément exposé au vent (1) et relié de manière active à celui-ci, permet de modifier l'élément exposé au vent (1) par la variation de son action aérodynamique pour le guidage et le maintien dans une position prédéfinie par rapport au véhicule nautique (4) et/ou par rapport à la manoeuvre dynamique, en particulier sur des trajectoires de vol prédéfinies, **caractérisé en ce que** plusieurs câbles de commande (103) forment un agencement de type matrice, les différents câbles de commande (103) étant actionnés sous forme regroupée par un élément de commande (140, 145) actionné conjointement, et les câbles de commande (103) sont actionnés dans des courses différentes, le cas échéant, par des points de fixation choisis différemment et/ou des multiplications ou démultiplications choisies différemment.

2. Véhicule nautique selon la revendication 1, **caractérisé en ce que** vers l'élément de commande (140, 145, 152) actif peut être acheminée de l'énergie auxiliaire, issue d'un accumulateur sur le lieu de l'élément de commande.

3. Véhicule nautique selon la revendication 1 ou 2, **caractérisé en ce qu'**il est prévu des moyens destinés à modifier l'action aérodynamique de l'élément exposé au vent (1) par la variation de son orientation, de son incidence et/ou de sa forme.

4. Véhicule nautique selon l'une quelconque des revendications 1 à 3, **caractérisé en ce que** des moyens destinés à modifier l'action aérodynamique de l'élément exposé au vent (1) incluent des moyens destinés à modifier la forme par une variation symétrique ou asymétrique du profil de surface portante sous l'effet d'une influence sur l'orientation de son bord de décollement des filets d'air, par le vrillage du profil de surface portante, par la variation symétrique et/ou asymétrique de la courbure du profil de surface portante et/ou par l'arisage et/ou par la variation du point d'application du câble de traction par rapport à la géométrie du profil de surface portante et/ou une variation de l'angle d'incidence du profil de surface portante, sachant que dans le cas d'un profil de surface portante à deux couches, les moyens destinés à modifier la forme incluent des moyens destinés à faire varier la distance entre les deux couches (105, 106).

5. Véhicule nautique selon la revendication 3 ou 4, **caractérisé en ce que** les moyens pour l'actionnement des deux côtés et/ou en sens opposé ou pour la variation dans le même sens ou non symétrique du profil de surface portante comportent un élément de commande (140, 145) commun.

6. Véhicule nautique selon l'une quelconque des revendications 3 à 5, **caractérisé en ce que**, dans le cas d'un élément exposé au vent (1) réalisé au moins en partie dans un matériau textile ou un autre matériau flexible, les moyens destinés à modifier l'action aérodynamique comportent un dispositif pour le réglage d'au moins un câble de commande (103), de préférence par allongement ou raccourcissement de celui-ci, au moyen de l'élément de commande, le câble de commande (103) comportant en particulier au moins un élément de renvoi ou de rappel sous la forme d'une poulie agissant par multiplication ou démultiplication.

7. Véhicule nautique selon l'une quelconque des revendications 1 à 6, **caractérisé en ce que** l'élément de commande est formé par un treuil et/ou un actionneur linéaire (152), qui peut être actionné en particulier avec un fluide sous pression, ledit actionneur linéaire (152) étant réalisé en particulier sous la forme d'un élément pneumatique dont la longueur diminue sous l'effet d'une surpression.

8. Véhicule nautique selon l'une quelconque des revendications 1 à 7, **caractérisé en ce qu'**il est prévu des moyens destinés à déterminer un signal de commande pour l'élément de commande (140, 145, 152) au moins indirectement à partir d'un signal caractérisant la direction du vent et/ou la vitesse du vent, et, le cas échéant, à partir d'un signal caractérisant l'état de la mer, sachant que le signal caractérisant la direction du vent et/ou la vitesse du vent et, le cas échéant, le signal caractérisant l'état de la mer est ou sont déterminé(s) par un capteur correspondant, et la direction du vent et/ou la vitesse du vent concernent la direction et/ou la vitesse du vent apparent, laquelle et/ou lesquelles est ou sont déterminée(s) de préférence directement sur l'élément exposé au vent.

9. véhicule nautique selon la revendication 8, **caractérisé en ce qu'**en aval de chacun des capteurs est montée une unité de processeur ou une unité logique qui, à partir des signaux des capteurs concernés, génère dans une association fixe ou variable un signal de position, un signal d'orientation et/ou un signal de manoeuvre pour l'élément exposé au vent (1), lequel forme au moins indirectement le signal de commande pour l'élément de commande (140, 145, 152).

10. véhicule nautique selon la revendication 8 ou 9, **caractérisé en ce qu'**au moins un capteur de position est prévu directement sur l'élément exposé au vent (1), lequel délivre un signal de sortie en relation avec la position et/ou l'orientation de ce dernier dans l'espace, ledit signal de sortie étant acheminé vers une première entrée d'un dispositif de formation de différence, vers l'autre entrée duquel est acheminé le signal de position, le signal d'orientation et/ou le signal de manoeuvre, et à la sortie du dispositif de formation de différence est délivré un signal de direction et/ou un signal de correction, qui forme au moins indirectement un signal de commande pour l'élément de commande (140, 145, 152).

11. Véhicule nautique selon la revendication 10, **caractérisé en ce que** le capteur de position est un GPS différentiel ou un autre dispositif de navigation qui, le cas échéant en tenant compte d'un signal supplémentaire d'un capteur d'accélération et/ou d'un capteur de champ magnétique terrestre, génère une information sur la position et/ou l'orientation de l'élément exposé au vent (1).

12. Véhicule nautique selon l'une quelconque des revendications 1 à 11, **caractérisé en ce que** des dispositifs de mesure de hauteur sont prévus sur le véhicule nautique (4) et sur l'élément exposé au vent (1) pour déterminer la position de l'élément exposé au vent.

13. Véhicule nautique selon l'une quelconque des revendications 1 à 12, **caractérisé en ce que** la longueur et l'orientation du câble de traction (1.1) sont utilisées pour déterminer la position de l'élément exposé au vent (1).

14. Véhicule nautique en particulier selon l'une quelconque des revendications 8 à 13, **caractérisé en ce qu'**il est prévu des moyens pour que, en particulier par l'intermédiaire d'un capteur d'accélération, une composante du mouvement des vagues du véhicule nautique (4), laquelle est active de préférence dans la direction du câble de traction, soit prise en compte pour diminuer le mouvement de l'élément exposé au vent (1), de telle sorte que la détermination de la position au moyen d'un GPS différentiel est compensée par le mouvement du bateau dans la direction du câble de traction, de telle sorte que le signal GPS se rapporte à une « plate-forme calmée », et/ou **en ce que** le treuil (2) est activé avec un décalage de phase correspondant.

15. Véhicule nautique selon la revendication 10, **caractérisé en ce que** le signal de direction et/ou le signal de correction forment le signal d'entrée d'un dispositif de commande automatique, dont la sortie est reliée à l'entrée de l'élément de commande (140, 145, 152).

16. Véhicule nautique selon la revendication 10, **caractérisé en ce que** le signal de sortie d'un capteur d'accélération et/ou d'un capteur de champ magnétique terrestre est acheminé en tant que signal de correction supplémentaire vers le dispositif de commande automatique.

17. Véhicule nautique selon l'une quelconque des revendications 8 à 16, **caractérisé en ce que** les capteurs et des moyens de traitement des signaux sont prévus respectivement, d'une part, à bord du véhicule nautique (4) et, d'autre part, sur l'élément exposé au vent (1), et des moyens de transmission des signaux sont prévus, et **en ce que** des moyens de transmission des signaux sont prévus pour induire l'échange de signaux entre les deux groupes de capteurs et de moyens de traitement de signaux.

18. Véhicule nautique selon l'une quelconque des revendications 8 à 17, **caractérisé en ce que** les signaux de position et les signaux d'orientation se rapportent à la position de l'élément exposé au vent (1) par rapport au véhicule nautique (4) ou se rapportent à la surface de la terre.

19. Véhicule nautique selon l'une quelconque des revendications 8 à 18, **caractérisé en ce que** le capteur est réalisé sous la forme d'un palpeur pour un décollement de filets d'air imminent ou déjà produit, lequel est formé par un élément, qui est prévu dans la zone de la surface, contournée par le courant d'air, de l'élément exposé au vent (1) et qui délivre un signal de sortie en cas d'application d'un courant d'air.

20. véhicule nautique selon l'une quelconque des revendications 1 à 19, **caractérisé en ce que** l'élément de commande (140, 145, 152) et/ou le capteur sont prévus dans un boîtier (102) réalisé en particulier avec une forme aérodynamique, qui forme le point d'application des forces pour le câble de traction (1.1) et à partir duquel partent les câbles de retenue et de commande (103), auxquels est relié l'élément exposé au vent (101).

21. Véhicule nautique selon la revendication 20, **caractérisé en ce que** le boîtier (102) est réalisé avec une forme ovoïde.

22. Véhicule nautique selon la revendication 20, **caractérisé en ce que** le boîtier (102) est réalisé sous forme de profil de surface portante et est orienté de préférence dans la direction du câble de traction (1.1) ou orthogonalement à celui-ci.

23. Véhicule nautique selon l'une quelconque des revendications 1 à 22, **caractérisé en ce qu'**en vue d'un gain d'énergie, il est prévu un générateur, qui est actionné par le courant de l'eau en dehors du véhicule nautique (4), en particulier par l'intermédiaire d'une hélice ou turbine, et qui achemine l'énergie électrique produite vers un accumulateur d'énergie, en particulier un générateur d'hydrogène avec un réservoir de stockage monté en aval.
